(19) Europäisches Patentamt
European Patent Office
Office européen des brevets

(11) **EP 4 530 117 A1**

(12) **EUROPEAN PATENT APPLICATION**
published in accordance with Art. 153(4) EPC

(43) Date of publication:
**02.04.2025 Bulletin 2025/14**

(21) Application number: **22948506.5**

(22) Date of filing: **30.06.2022**

(51) International Patent Classification (IPC):
**B60L 15/20** *(2006.01)*

(52) Cooperative Patent Classification (CPC):
**B60L 15/20**

(86) International application number:
**PCT/CN2022/102808**

(87) International publication number:
**WO 2024/000400 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **ZHOU, Guozhu
  Shenzhen, Guangdong 518129 (CN)**
• **ZHANG, Siliang
  Shenzhen, Guangdong 518129 (CN)**
• **GUO, Zhenhua
  Shenzhen, Guangdong 518129 (CN)**
• **LIU, Donghui
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **ACCELERATION COMPENSATION METHOD AND APPARATUS, AND VEHICLE**

(57) Embodiments of this application provide an acceleration compensation method. The method includes: obtaining traveling environment information and/or traveling parameter information of a vehicle running in a first mode; and switching the first mode of the vehicle to a second mode when the traveling environment information and/or the traveling parameter information meet/meets a preset condition. **In** a case of a same speed and/or accelerator pedal opening, an acceleration capability of the vehicle in the second mode is greater than an acceleration capability in the first mode, and an ECO mode or a power-saving mode of the vehicle includes the first mode and the second mode. The foregoing method may be applied to an intelligent vehicle or an electric vehicle, so that acceleration compensation can be performed on the vehicle in a scenario in which the vehicle requires a large torque or a high power, to adjust an acceleration capability of the vehicle in time, and improve driving experience of a user.

<u>300</u>

S301: Obtain traveling environment information and/or traveling parameter information of a vehicle running in a first mode

S302: Switch the first mode of the vehicle to a second mode when the traveling environment information and/or the traveling parameter information meet/meets a preset condition

FIG. 3

**Description**

**TECHNICAL FIELD**

Embodiments of this application relate to the field of intelligent vehicles, and more specifically, to an acceleration compensation method and apparatus, and a vehicle.

**BACKGROUND**

With wide use of new energy vehicles in daily life, a battery life of the new energy vehicles is increasingly valued. Currently, most new energy vehicles can improve the battery life of the vehicles by setting an ECO (power-saving) mode.

However, when the vehicle is in the ECO (power-saving) mode, in some scenarios in which a large torque or a high power is required (for example, a vehicle climbing scenario), because acceleration degradation is performed when the vehicle is in the ECO mode, and an output capability of a torque or a power of the vehicle is limited, a power requirement of the vehicle may not be met. In addition, if a user only starts to adjust an acceleration mode of the vehicle when realizing that an acceleration capability of the vehicle is insufficient, the acceleration capability of the vehicle may be difficult to match an acceleration requirement of the user because the acceleration mode is not adjusted, and consequently driving experience of the user is poor.

**SUMMARY**

Embodiments of this application provide an acceleration compensation method and apparatus, and a vehicle, so that acceleration compensation can be performed on the vehicle in a scenario in which the vehicle requires a large torque or a high power, to adjust an acceleration capability of the vehicle in time, and improve driving experience of a user.

The vehicle (sometimes referred to as a vehicle for short) in this application is a vehicle in a broad sense, and may be a vehicle (for example, a car, a truck, a motorcycle, a train, an airplane, or a ship), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in this application.

According to a first aspect, an acceleration compensation method is provided. The method includes: obtaining traveling environment information and/or traveling parameter information of a vehicle running in a first mode; and switching the first mode of the vehicle to a second mode when the traveling environment information and/or the traveling parameter information meet/meets a preset condition. In a case of a same speed and/or accelerator pedal opening, an acceleration capability of the vehicle in the second mode is greater than an acceleration capability in the first mode, and an ECO mode or a power-saving mode of the vehicle includes the first mode and the second mode.

The traveling environment information of the vehicle may include one or more of a road slope, road type information, road speed limit information, road congestion information, and road average vehicle speed information. The traveling parameter information of the vehicle may include one or more of an average speed, an acceleration, an accelerator pedal opening, a state of charge, a torque, and an output power of a power end that are of the vehicle when traveling.

Optionally, the first mode and the second mode may be one submode of the ECO mode or the power-saving mode. The first mode and the second mode may be set for the vehicle before delivery, and may be directly selected by a user.

Optionally, the first mode and the second mode may be defined by the user based on a user requirement. For example, the user may set a device (including but not limited to an air conditioner, a camera, and a voice assistant) allowed to be enabled by the vehicle in the first mode and the second mode. For another example, the user may set a device that is not allowed to be enabled by the vehicle in the first mode and the second mode.

That the acceleration capability of the vehicle in the second mode is greater than the acceleration capability of the vehicle in the first mode may be expressed in a plurality of manners. For example, in the case of the same speed and/or accelerator pedal opening, a torque of the vehicle traveling in the second mode is greater than a torque of the vehicle traveling in the first mode. For another example, in the case of the same speed and/or accelerator pedal opening, an output power of the power end of the vehicle traveling in the second mode is greater than a power of the power end of the vehicle traveling in the first mode. For another example, in the case of the same speed and/or accelerator pedal opening, a torque change amplitude of the vehicle traveling in the second mode time is greater than a torque change amplitude of the vehicle traveling in the first mode within same time.

In embodiments of this application, the vehicle can switch the first mode of the vehicle to the second mode based on the traveling environment information and/or the traveling parameter information. In this way, the acceleration capability of the vehicle can be improved when the vehicle is in the ECO mode or the power-saving mode, thereby improving driving experience of the user.

With reference to the first aspect, in some implementations of the first aspect, the traveling environment information includes the road slope, and the switching the first mode of the vehicle to a second mode when the traveling environment information and/or the traveling parameter information meet/meets a preset condition includes: switching the first mode of the vehicle to the second mode when the road slope is greater than or equal to a first threshold.

The road slope may be obtained from fixed information or navigation information in the traveling environment information, and the first threshold may be a preset road slope value. When the road slope is greater than the first threshold, the acceleration capability of the vehicle is improved by switching the first mode to the second mode.

In embodiments of this application, when the road slope is greater than or equal to the first threshold, the first mode in which the vehicle travels is switched to the second mode. In this way, the acceleration capability of the vehicle can quickly match an acceleration requirement of the user when the vehicle is in the ECO mode or the power-saving mode, thereby improving driving experience of the user.

With reference to the first aspect, in some implementations of the first aspect, the traveling environment information includes the road type information, and the switching the first mode of the vehicle to the second mode when the road slope is greater than or equal to a first threshold includes: switching, based on the road type information, the first mode of the vehicle to the second mode when the slope is greater than or equal to the first threshold.

The road type information may include one or more of a highway, a suburban road, an urban road, and a mountain road. The first threshold may be set to different values corresponding to different types of roads. For example, the first threshold corresponding to the highway may be set to A. When the vehicle travels on the highway and a slope of the highway is greater than A, the first mode may be switched to the second mode based on a first preset slope range that the slope of the highway is in. For another example, the first threshold corresponding to the mountain road may be set to D. When the vehicle travels on the mountain road, and a slope of the mountain road is greater than D, the first mode may be switched to the second mode based on a second preset slope range that the slope of the mountain road is in.

In embodiments of this application, when the road slope is greater than or equal to the first threshold, the acceleration capabilities of the vehicle in the case of the same speed and/or accelerator pedal opening can be improved based on the road type information and the road slope. In this way, the acceleration capability of the vehicle can further quickly match the acceleration requirement of the user when the vehicle is in the ECO mode or the power-saving mode, thereby improving driving experience of the user.

With reference to the first aspect, in some implementations of the first aspect, the traveling parameter information includes one or more of the average speed, the acceleration, and the accelerator pedal opening, and the switching the first mode of the vehicle to a second mode when the traveling environment information and/or the traveling parameter information meet/meets a preset condition includes: switching the first mode of the vehicle to the second mode when a current average speed of the vehicle is greater than or equal to a historical average speed of the vehicle traveling on the road; and/or switching the first mode of the vehicle to the second mode when a current acceleration of the vehicle is greater than or equal to a historical average acceleration of the vehicle traveling on the road; and/or switching the first mode of the vehicle to the second mode when a current average accelerator pedal opening of the vehicle is greater than or equal to a historical average accelerator pedal opening of the vehicle traveling on the road.

The historical average speed, the historical acceleration, and the historical accelerator pedal opening of the vehicle may belong to historical traveling data of the vehicle, and the historical traveling data may be sent to the vehicle by using a cloud server. The historical traveling data may be all historical traveling data of the vehicle, may be traveling data of the vehicle in a past month, or may be traveling data of the vehicle in a past week. This is not limited in embodiments of this application.

In embodiments of this application, comparison can be performed based on the traveling parameter information of the vehicle and the historical traveling data of the vehicle. When traveling data included in the traveling parameter information of the vehicle is greater than or equal to the historical traveling data of the vehicle, it indicates that a driving style of the user is radical. In this case, the acceleration capabilities of the vehicle in the case of the same speed and/or accelerator pedal opening can be improved, so that a driving mode of the vehicle matches the driving style of the user.

With reference to the first aspect, in some implementations of the first aspect, the traveling parameter information further includes an accelerator pedal opening of the vehicle within preset duration, and the switching the first mode of the vehicle to a second mode when the traveling environment information and/or the traveling parameter information meet/meets a preset condition includes: switching the first mode of the vehicle to the second mode when a quantity of times that the accelerator pedal opening is greater than or equal to a second threshold is greater than or equal to a third threshold.

The second threshold may be a preset pedal opening, and the third threshold may be a preset quantity of times that a driver steps on an accelerator pedal. For example, it is detected that a quantity of times that an opening of the accelerator pedal stepped by the driver is greater than 70% within 20 seconds is five, which is greater than the preset quantity of times by two. In this case, the first mode of the vehicle may be switched to the second mode. For another example, it is detected that a quantity of times that an opening of the accelerator pedal stepped by the driver is greater than 70% within 60 seconds is 12, which is greater than the preset quantity of times by ten. In this case, the first mode of the vehicle may be switched to the second mode.

In embodiments of this application, when the accelerator pedal opening of the vehicle meets the preset condition within the preset duration, the acceleration capabilities of the vehicle in the case of the same speed and/or accelerator pedal opening can be improved. In this way, the acceleration capability of the vehicle can be adjusted in time based on a driving action of the driver when the vehicle is in the ECO mode or the power-saving mode, so that an acceleration mode of the vehicle can match a driving habit of the user.

With reference to the first aspect, in some implementations of the first aspect, the traveling parameter information includes the state of charge of the vehicle, and the method further includes: determining, based on the state of charge, a third driving mode in which the vehicle travels, where the ECO mode or the power-saving mode of the vehicle includes the third mode; and before the switching the first mode of the vehicle to the second mode, the method further includes: determining that the acceleration capability of the vehicle in the second mode is less than an acceleration capability of the vehicle in the third mode.

The third mode belongs to the ECO mode or the power-saving mode of the vehicle, and the acceleration capability of the vehicle in the third mode may be a maximum acceleration capability that can be reached by the vehicle at a current state of charge.

Before the vehicle switches the first mode to the second mode, a value relationship between the acceleration capability of the vehicle in the second mode and the acceleration capability of the vehicle in the third mode may be determined, to determine different acceleration compensation policies. When the acceleration capability of the vehicle in the second mode is less than the acceleration capability in the third mode, the first mode of the vehicle is switched to the second mode. When the acceleration capability of the vehicle in the second mode is greater than or equal to the acceleration capability in the third mode, the first mode of the vehicle is switched to the third mode.

That the acceleration capability of the vehicle in the second mode is less than the acceleration capability in the third mode may be determined in a plurality of manners.

For example, a current maximum output power of the battery may be determined based on the state of charge. Because the current maximum output power of the battery corresponds to a maximum output power of the power end, the maximum output power of the power end of the vehicle may be obtained. Then, an output power that is of the power end and that corresponds to the second mode is determined, and the output power is compared with the maximum output power. If the output power is less than the maximum output power, in the case of the same speed and/or accelerator pedal opening, the acceleration capability of the vehicle in the second mode is less than the acceleration capability in the third mode. If the output power is greater than the maximum output power, in the case of the same speed and/or accelerator pedal opening, the acceleration capability of the vehicle in the second mode is greater than the acceleration capability in the third mode.

For another example, the current maximum output power of the battery may be determined based on the state of charge. Because the current maximum output power of the battery corresponds to the maximum output power of the power end, the maximum output power of the power end of the vehicle may be obtained, and a maximum torque is obtained through calculation based on the maximum output power. Then, a torque corresponding to the second mode of the vehicle is compared with the maximum torque, and if the torque corresponding to the second mode is less than the maximum torque, in the case of the same speed and/or accelerator pedal opening, the acceleration capability of the vehicle in the second mode is less than the acceleration capability in the third mode. If a second torque is greater than the maximum torque, in the case of the same speed and/or accelerator pedal opening, the acceleration capability of the vehicle in the second mode is greater than the acceleration capability in the third mode.

In embodiments of this application, the third mode in which the vehicle travels is determined based on the current state of charge of the vehicle, and the first mode is switched to the second mode only when the acceleration capability of the vehicle in the second mode is less than the acceleration capability in the third mode. In this way, the acceleration capability of the vehicle can quickly match the acceleration requirement of the user within a capability range that can be reached by the vehicle battery, thereby improving driving experience of the user.

With reference to the first aspect, in some implementations of the first aspect, the switching the first mode of the vehicle to a second mode when the traveling environment information and/or the traveling parameter information meet/meets a preset condition includes: when the traveling environment information and/or the traveling parameter information meet/meets the preset condition, adjusting a first torque of the vehicle traveling in the first mode to a second torque of the vehicle traveling in the second mode, where in the case of the same speed and/or accelerator pedal opening, the second torque is greater than the first torque.

In embodiments of this application, when the traveling environment information and/or the traveling parameter information of the vehicle meet/meets the preset condition, the vehicle can adjust the first torque of the vehicle traveling in the first mode to the second torque of the vehicle traveling in the second mode. In this way, the acceleration capability of the vehicle can be improved by increasing the torque when the vehicle is in the ECO mode or the power-saving mode, thereby improving the driving experience of the user.

With reference to the first aspect, in some implementations of the first aspect, the switching the first mode of the vehicle to a second mode when the traveling environment information and/or the traveling parameter information meet/meets a preset condition includes: when the traveling environment information and/or the traveling parameter information meet/meets the preset condition, adjusting a first power of the vehicle traveling in the first mode to a second power of the vehicle traveling in the second mode, where in the case of the same speed and/or accelerator pedal opening, the second power is greater than the first power.

In embodiments of this application, when the traveling environment information and/or the traveling parameter information of the vehicle meet/meets the preset condition, the vehicle can adjust the first power of the vehicle traveling in the first mode to the second power of the vehicle traveling in the second mode. In this way, the acceleration capability of the vehicle can be improved by increasing the output power of the power end of the vehicle when the vehicle is in the ECO mode or the power-saving mode, thereby improving the driving experience of the user.

With reference to the first aspect, in some implementations of the first aspect, the switching the first mode of the vehicle to a second mode when the traveling environment information and/or the traveling parameter information meet/meets a preset condition includes: when the traveling environment information and/or the traveling parameter information meet/meets the preset condition, adjusting a first torque change rate of the vehicle traveling in the first mode to a second torque change rate of the vehicle traveling in the second mode, where in the case of the same speed and/or accelerator pedal opening, the second torque change rate is greater than the first torque change rate.

In embodiments of this application, when the traveling environment information and/or the traveling parameter information of the vehicle meet/meets the preset condition, the vehicle can adjust the first torque change rate of the vehicle traveling in the first mode to the second torque change rate of the vehicle traveling in the second mode. In this way, the acceleration capability of the vehicle can be improved by increasing the torque change rate of the vehicle when the vehicle is in the ECO mode or the power-saving mode, thereby improving the driving experience of the user.

According to a second aspect, an acceleration compensation apparatus is provided, where the apparatus includes: an obtaining unit, configured to obtain traveling environment information and/or traveling parameter information of a vehicle running in a first mode; and a processing unit, configured to switch the first mode of the vehicle to a second mode when the traveling environment information and/or the traveling parameter information meet/meets a preset condition. In a case of a same speed and/or accelerator pedal opening, an acceleration capability of the vehicle in the second mode is greater than an acceleration capability in the first mode, and an ECO mode or a power-saving mode of the vehicle includes the first mode and the second mode.

With reference to the second aspect, in some implementations of the second aspect, the traveling environment information includes a road slope.

The processing unit is specifically configured to switch the first mode of the vehicle to the second mode when the road slope is greater than or equal to a first threshold.

With reference to the second aspect, in some implementations of the second aspect, the traveling environment information further includes road type information; and the processing unit is specifically configured to switch, based on the road type information, the first mode of the vehicle to the second mode when the slope is greater than or equal to the first threshold.

With reference to the second aspect, in some implementations of the second aspect, the traveling parameter information includes one or more of an average speed, an acceleration, and an accelerator pedal opening, and the processing unit is specifically configured to: switch the first mode of the vehicle to the second mode when a current average speed of the vehicle is greater than or equal to a historical average speed of the vehicle traveling on the road; and/or switch the first mode of the vehicle to the second mode when a current acceleration of the vehicle is greater than or equal to a historical average acceleration of the vehicle traveling on the road; and/or switch the first mode of the vehicle to the second mode when a current average accelerator pedal opening of the vehicle is greater than or equal to a historical average accelerator pedal opening of the vehicle traveling on the road.

With reference to the second aspect, in some implementations of the second aspect, the traveling parameter information further includes an accelerator pedal opening of the vehicle within preset duration, and the processing unit is specifically configured to switch the first mode of the vehicle to the second mode when a quantity of times that the accelerator pedal opening is greater than or equal to a second threshold is greater than or equal to a third threshold.

With reference to the second aspect, in some implementations of the second aspect, the processing unit is specifically configured to determine, based on a state of charge, a third mode in which the vehicle travels, where the ECO mode or the power-saving mode of the vehicle includes the third mode; and
the processing unit is further configured to determine that the acceleration capability of the vehicle in the second mode is less than an acceleration capability of the vehicle in the third mode.

With reference to the second aspect, in some implementations of the second aspect, the processing unit is specifically configured to: when the traveling environment information and/or the traveling parameter information meet/-meets the preset condition, adjust a first torque of the vehicle traveling in the first mode to a second torque of the vehicle traveling in the second mode, where in the case of the same speed and/or accelerator pedal opening, the second torque is greater than the first torque.

With reference to the second aspect, in some implementations of the second aspect, the processing unit is specifically configured to: when the traveling environment information and/or the traveling parameter information meet/- meets the preset condition, adjust a first power of the vehicle traveling in the first mode to a second power of the vehicle traveling in the second mode, where in the case of the same speed and/or accelerator pedal opening, the second power is greater than the first power.

With reference to the second aspect, in some implementations of the second aspect, the processing unit is specifically configured to: when the traveling environment information and/or the traveling parameter information meet/- meets the preset condition, adjust a first torque change rate of the vehicle traveling in the first mode to a second torque change rate of the vehicle traveling in the second mode, where in the case of the same speed and/or accelerator pedal opening, the second torque change rate is greater than the first torque change rate.

According to a third aspect, an acceleration compensation apparatus is provided, where the apparatus includes at least one processor and a memory, the at least one processor is coupled to the memory, and is configured to read and execute instructions in the memory. The apparatus is configured to perform the methods in the foregoing aspects.

According to a fourth aspect, a computer-readable medium is provided. The computer-readable medium stores program code. When the computer program code is run on a computer, the computer is enabled to perform the methods in the foregoing aspects.

According to a fifth aspect, a chip is provided, where the chip includes at least one processor and a memory, the at least one processor is coupled to the memory, and is configured to read and execute instructions in the memory. The apparatus is configured to perform the methods in the foregoing aspects.

According to a sixth aspect, a computer program product is provided, where the computer product includes a computer program. When the computer program is run, a computer is enabled to perform the methods in the foregoing aspects.

According to a seventh aspect, a vehicle is provided, where the vehicle includes at least one processor and a memory, the at least one processor is coupled to the memory, and is configured to read and execute instructions in the memory. The vehicle is configured to perform the method in the first aspect.

## BRIEF DESCRIPTION OF DRAWINGS

FIG. 1 is a functionality diagram of a vehicle according to an embodiment of this application;

FIG. 2 shows a system architecture of an acceleration compensation method according to an embodiment of this application;

FIG. 3 is a schematic flowchart of an acceleration compensation method according to an embodiment of this application;

FIG. 4A and FIG. 4B are a schematic flowchart of a slope-based acceleration compensation method according to an embodiment of this application;

FIG. 5(a)-1 to FIG. 5(j) are diagrams of an application scenario of an acceleration compensation method according to an embodiment of this application;

FIG. 6 is a schematic flowchart of a driving style-based acceleration compensation method according to an embodiment of this application;

FIG. 7 is a schematic flowchart of a driving action-based acceleration compensation method according to an embodiment of this application;

FIG. 8A and FIG. 8B are a schematic flowchart of a multi-policy-based acceleration compensation method according to an embodiment of this application;

FIG. 9 is a diagram of an acceleration compensation apparatus according to this application; and

FIG. 10 is a diagram of another acceleration compensation apparatus according to this application.

## DESCRIPTION OF EMBODIMENTS

The following describes technical solutions in embodiments of this application with reference to accompanying drawings.

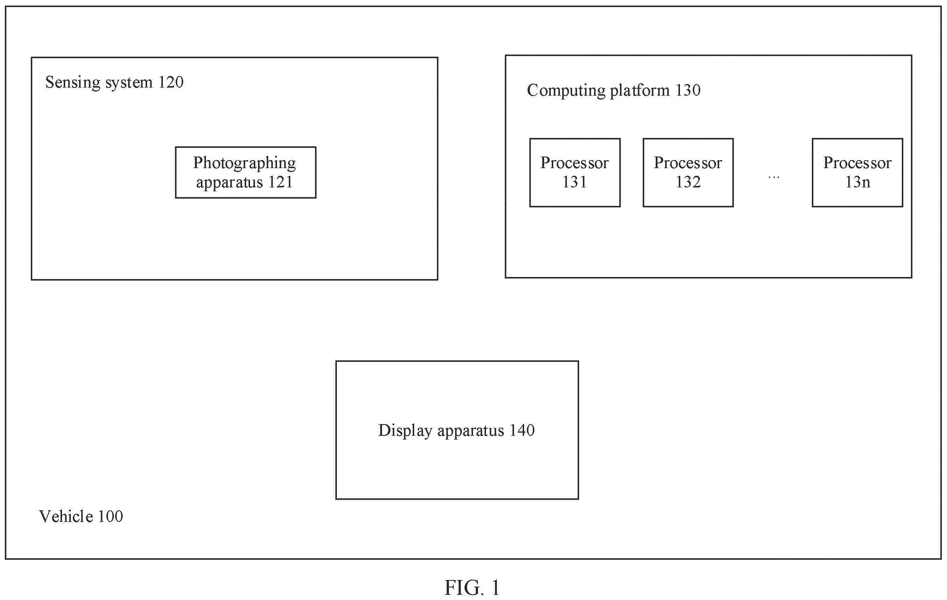

For ease of understanding, with reference to FIG. 1, an example scenario to which an embodiment of this application is applicable is described in the following by using an intelligent driving scenario as an example.

FIG. 1 is a functionality diagram of a vehicle 100 according to an embodiment of this application. It should be understood that FIG. 1 and related descriptions are merely examples, and are not intended to limit the vehicle in embodiments of this application.

In an implementation process, the vehicle 100 may be configured to be in a fully or partially autonomous driving mode, or may be manually driven by a user. For example, the vehicle 100 may obtain surrounding environment information of the vehicle 100 by using a sensing system 120, and obtain an autonomous driving policy based on analysis of the surrounding environment information to implement full autonomous driving, or present an analysis result to the user to implement partial autonomous driving.

The vehicle 100 may include a plurality of subsystems, such as the sensing system 120, a computing platform 130, and a display apparatus 140. Optionally, the vehicle 100 may include more or fewer subsystems, and each subsystem may include one or more components. In addition, each subsystem and component of the vehicle 100 may be interconnected in a wired or wireless manner.

The sensing system 120 may include several types of sensors that sense the surrounding environment information of the vehicle 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter-wave radar, an ultrasonic radar, and a photographing apparatus 121.

The photographing apparatus 121 may be configured to capture image information of a surrounding environment of the vehicle 100. The photographing apparatus 121 may include a monocular camera, a binocular camera, a structured light camera, a panoramic camera, and the like. The image information obtained by the photographing apparatus 121 may include static image information, and may further include video stream information. The image information may be stored in a form of an image or a video, or may be stored in a form of a parameter of an image or a video, for example, parameter information such as brightness, grayscale, color distribution, contrast, and a pixel of an image.

Some or all functions of the vehicle 100 may be controlled by the computing platform 130. The computing platform 130 may include processors 131 to 13n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may invoke the instructions in the memory and execute the instructions, to implement a corresponding function.

The computing platform 130 may control functions of the vehicle 100 based on inputs received from various subsystems (for example, the sensing system 120). In some embodiments, the computing platform 130 may be operated to provide control over a plurality of aspects of the vehicle 100 and the subsystem of the vehicle 100.

Optionally, the foregoing components are merely examples. In actual application, components in the foregoing modules may be added or deleted based on an actual requirement. FIG. 1 should not be understood as a limitation on embodiments of this application.

An autonomous driving vehicle traveling on a road, for example, the vehicle 100, may identify an object in a surrounding environment of the vehicle to determine adjustment to a current speed. The object may be another vehicle, a traffic control device, or an object of another type. In some examples, each identified object may be independently considered, and speed adjustment to be made by the autonomous driving vehicle may be determined based on an object characteristic, for example, a current speed of the object, an acceleration of the object, a distance of the object from the vehicle.

Optionally, the vehicle 100 or a sensing and computing device (for example, the computing platform 130) associated with the vehicle 100 may predict, based on the characteristic of the identified object and a status (for example, traffic, rain, ice on the road, or the like) of the surrounding environment, a behavior of the identified object. Optionally, each identified object depends on a behavior of another identified object, and therefore all identified objects may be further considered together to predict a behavior of a single identified object. The vehicle 100 can adjust a speed of the vehicle 100 based on the predicted behavior of the identified object. In other words, the autonomous driving vehicle can determine a steady status (for example, acceleration, deceleration, or stop) the vehicle needs to adjust to based on the predicted behavior of the object. In this process, other factors may also be considered to determine the speed of the vehicle 100, for example, a lateral location of the vehicle 100 on the road on which the vehicle 100 is traveling, a curvature of the road, and proximities of static and dynamic objects.

In addition to providing an instruction for adjusting the speed of the autonomous driving vehicle, the computing device may further provide an instruction for changing a steering angle of the vehicle 100, so that the autonomous driving vehicle follows a given trajectory and/or maintains a safe lateral and longitudinal distance from an object (for example, a car in an adjacent lane on the road) near the autonomous driving vehicle.

The vehicle (sometimes referred to as a vehicle for short) in this application is a vehicle in a broad sense, and may be a vehicle (for example, a car, a truck, a motorcycle, an airplane, a train, or a ship), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not limited in embodiments of this application.

With wide use of new energy vehicles in daily life, increasing attention is paid on a battery life of the new energy vehicles. Currently, most new energy vehicles can improve the battery life by setting an ECO (power-saving) mode.

However, when the vehicle is in the ECO (power-saving) mode, in some scenarios in which a large torque or a high power is required, because acceleration degradation (a power output capability is weakened compared with that in a normal mode) is performed when the vehicle is in the ECO mode, and an output capability of a torque or a power of the vehicle is limited, a power requirement of the vehicle may not be met. In addition, if the user only starts to adjust an acceleration mode of the vehicle when realizing that an acceleration capability of the vehicle is insufficient, the acceleration capability of the vehicle may be difficult to match a requirement of the user because the acceleration mode is not adjusted in time, and consequently driving experience of the user is poor.

For example, in a climbing scenario in which the user drives the vehicle in the ECO mode. Because a torque or power output capability of the vehicle is limited after the ECO mode is enabled, the acceleration capability of the vehicle may not be sufficient to support successful climbing of the vehicle. In this case, the user may adjust the acceleration mode of the vehicle to improve the acceleration capability of the vehicle. However, if the user only starts to adjust the acceleration mode of the vehicle when realizing that the acceleration capability of the vehicle is insufficient, it may be difficult for the vehicle to match an acceleration requirement of the user within long time because the vehicle needs to switch the mode, and consequently driving experience of the user is poor.

Embodiments of this application provide an acceleration compensation method and apparatus, and a vehicle, so that acceleration compensation can be performed on the vehicle in a scenario in which the vehicle requires the large torque or the high power, to adjust the acceleration capability of the vehicle in time, and improve driving experience of the user.

The following first describes a system architecture to which the acceleration compensation method provided in embodiments of this application is applicable.

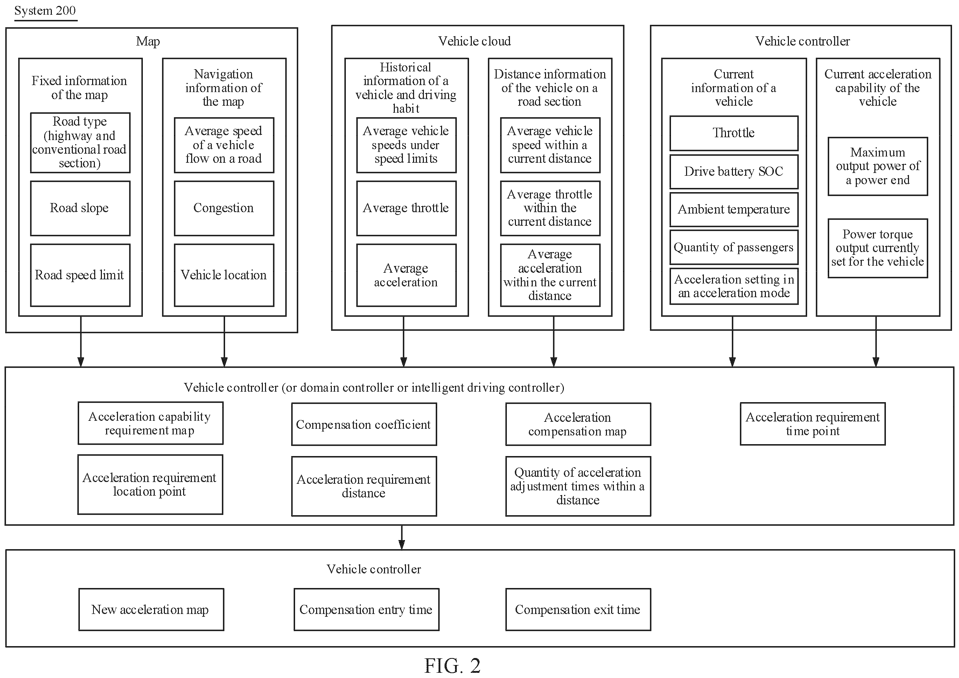

FIG. 2 shows a system architecture 200 of an acceleration compensation method according to an embodiment of this application. The system architecture 200 may be applied to the vehicle 100 in FIG. 1.

The system architecture 200 may include a map module, a vehicle cloud module, and a vehicle controller. A vehicle may obtain one or more of road information, navigation information, historical driving information, and current road section driving information by using the map module and the vehicle cloud module, and obtain instantaneous vehicle traveling information and/or acceleration capability information by using the vehicle controller (a domain controller or an intelligent driving controller). After obtaining the foregoing information, the vehicle controller may analyze an acceleration requirement of a user from several aspects: a road condition, a driving style of the user, and a driving action of the user, and complete calculation of driving compensation. Finally, the vehicle controller can perform acceleration compensation within a period of time.

Specifically, the vehicle may obtain fixed information of a map and navigation information of the map by using the map module. The fixed information of the map may include a road type (a highway section or a conventional road section), a road slope, and a road speed limit. The navigation information of the map may include: an average speed of a vehicle flow on a road on which the vehicle travels, congestion on the road, and a location of the vehicle on the road. Historical information (driving habit information of the user) of the vehicle and distance information of the vehicle on a traveling road section may be obtained by using the vehicle cloud module. The historical information (the driving habit information of the user) of the vehicle may include: historical average vehicle speeds of the vehicle under speed limit conditions, and a historical average accelerator pedal opening and a historical average acceleration of the vehicle on the traveling road section. The traveling distance information of the vehicle on the traveling road section may include: an average speed of the vehicle on the current traveling road section, an average accelerator pedal opening of the vehicle on the current traveling road section, and an average acceleration of the vehicle on the current traveling road section. The vehicle controller may collect driving information and acceleration capability information of the vehicle on the current road section. The traveling information of the vehicle on the current road section may include information such as an accelerator pedal opening, a state of charge (state of charge, SOC) of a driving battery, an ambient temperature in the vehicle, a quantity of passengers, and an acceleration setting of an acceleration mode. The current acceleration capability information of the vehicle may include: a maximum output power of a power end of the vehicle and a current controlled torque output of the vehicle.

It should be understood that the traveling information and the acceleration capability information of the vehicle may also be collectively referred to as traveling parameter information of the vehicle.

After obtaining the foregoing information, the vehicle controller may obtain an acceleration compensation parameter through calculation based on the foregoing information, where the acceleration compensation parameter may include: an acceleration capability requirement map, a compensation coefficient, an acceleration compensation map, an acceleration requirement time point, an acceleration requirement location point, an acceleration requirement distance, and a quantity of acceleration adjustment times within a distance that are of the vehicle. The acceleration capability requirement map may be one or more of a torque, an accelerator pedal opening, a power, or a vehicle speed that needs to be compensated by the vehicle, and the acceleration compensation map may be one or more of a torque, an accelerator pedal opening, a power, or a vehicle speed that can be compensated by the vehicle within a battery capability range.

After the acceleration compensation parameter is obtained through calculation, the vehicle controller can perform acceleration compensation on the vehicle based on the acceleration compensation parameter within a period of time (between a compensation entry point and a compensation exit point).

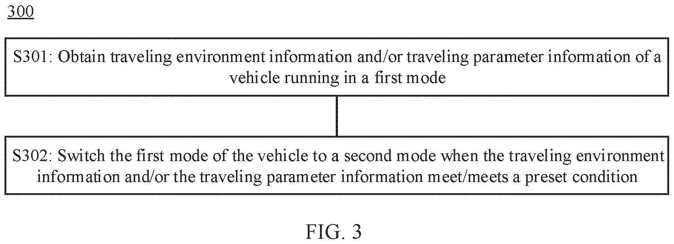

FIG. 3 is a schematic flowchart of an acceleration compensation method according to an embodiment of this application. The acceleration compensation method in FIG. 3 may be applied to the vehicle 100, and a method 300 may include the following steps.

S301: Obtain traveling environment information and/or traveling parameter information of a vehicle running in a first mode.

The traveling environment information of the vehicle may include one or more of a road slope, road type information, road speed limit information, road congestion information, and road average vehicle speed information. The traveling parameter information of the vehicle may include one or more of an average speed, an acceleration, an accelerator pedal opening, a state of charge, a torque, and an output power of a power end that are of the vehicle when traveling.

The first mode may be one submode of an ECO mode or a power-saving mode. After the ECO mode or the power-saving mode of the vehicle is enabled, a battery life of the vehicle is enhanced, and a torque and power output capability (an acceleration capability) is limited.

Optionally, the first mode may be set for the vehicle before delivery, and may be directly selected by a user.

Optionally, the first mode may be defined by the user based on a user requirement. For example, the user may set a device (including but not limited to an air conditioner, a camera, and a voice assistant) allowed to be enabled by the vehicle in the first mode. For another example, the user may set a device that is not allowed to be enabled by the vehicle in the first mode.

S302: Switch the first mode of the vehicle to a second mode when the traveling environment information and/or the traveling parameter information meet/meets a preset condition.

Specifically, the second mode may be one submode of an ECO mode or a power-saving mode. In a case of a same speed and/or accelerator pedal opening, an acceleration capability of the vehicle in the second mode is greater than an acceleration capability in the first mode.

Optionally, the second mode may be set for the vehicle before delivery, and may be directly selected by a user.

Optionally, the second mode may be defined by the user based on the user requirement. For example, the user may set a device allowed to be enabled by the vehicle in the second mode. For another example, the user may set a device that is not allowed to be enabled by the vehicle in the second mode.

That the acceleration capability of the vehicle in the second mode is greater than the acceleration capability of the vehicle in the first mode may be expressed in a plurality of manners. For example, in the case of the same speed and/or accelerator pedal opening, a torque of the vehicle traveling in the second mode is greater than a torque of the vehicle traveling in the first mode. For another example, in the case of the same speed and/or accelerator pedal opening, an output power of the power end of the vehicle traveling in the second mode is greater than a power of the power end of the vehicle traveling in the first mode. For another example, in the case of the same speed and/or accelerator pedal opening, a torque change amplitude of the vehicle traveling in the second mode time is greater than a torque change amplitude of the vehicle traveling in the first mode within same time.

In embodiments of this application, the vehicle can switch the first mode of the vehicle to the second mode based on the traveling environment information and/or the traveling parameter information. In this way, the acceleration capability of the vehicle can be improved when the vehicle is in the ECO mode or the power-saving mode, thereby improving driving experience of the user.

Different manners can be used to switch the first mode of the vehicle to the second mode when the traveling environment information and/or the traveling parameter information meet/meets the preset condition.

In a possible implementation, the traveling environment information includes the road slope, and the switching the first mode of the vehicle to a second mode when the traveling environment information and/or the traveling parameter information meet/meets a preset condition includes: switching the first mode of the vehicle to the second mode when the road slope is greater than or equal to a first threshold.

The road slope may be obtained from fixed information or navigation information in vehicle environment information, and the first threshold may be a preset road slope value. When the road slope is greater than the first threshold, the acceleration capability of the vehicle is improved by switching the first mode to the second mode.

In embodiments of this application, when the road slope is greater than or equal to the first threshold, the first mode in which the vehicle travels is switched to the second mode. In this way, the acceleration capability of the vehicle can quickly match an acceleration requirement of the user when the vehicle is in the ECO mode or the power-saving mode, thereby improving driving experience of the user.

In a possible implementation, the traveling environment information includes the road type information, and the switching the first mode of the vehicle to the second mode when the road slope is greater than or equal to a first threshold includes: switching, based on the road type information, the first mode of the vehicle to the second mode when the slope is greater than or equal to the first threshold.

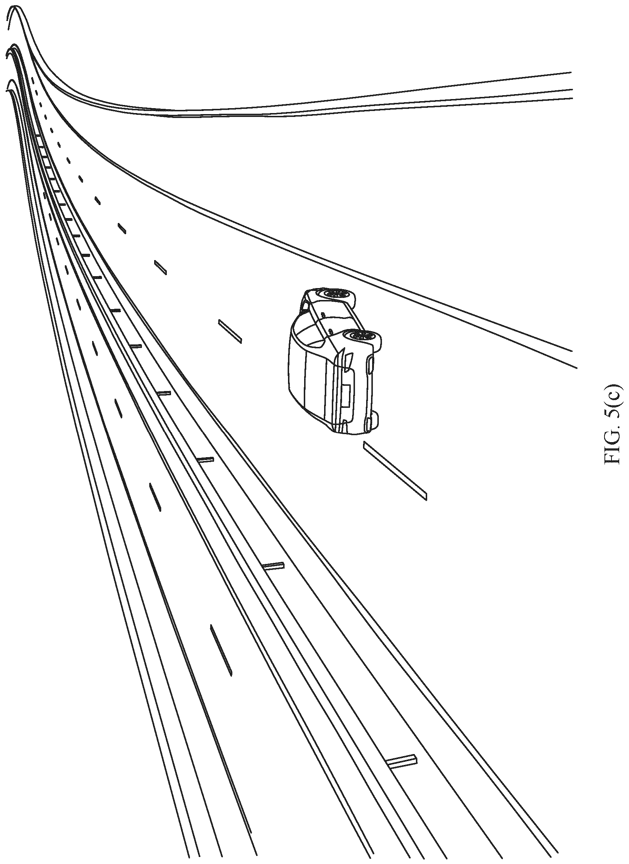

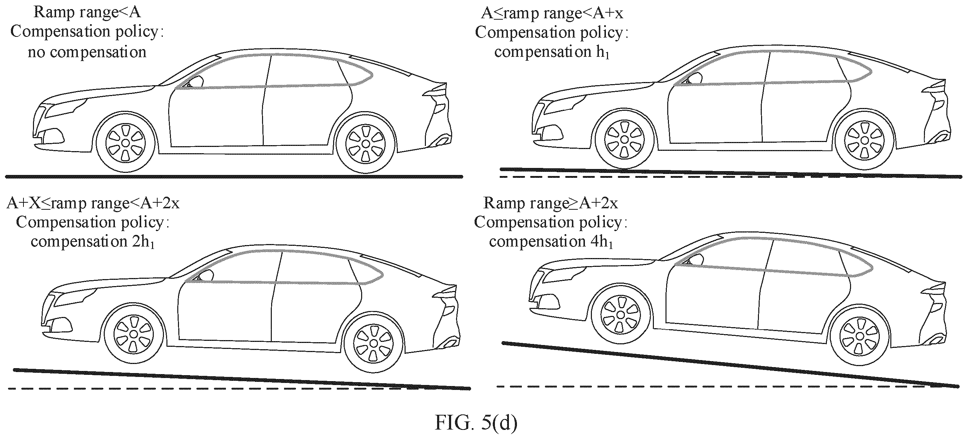

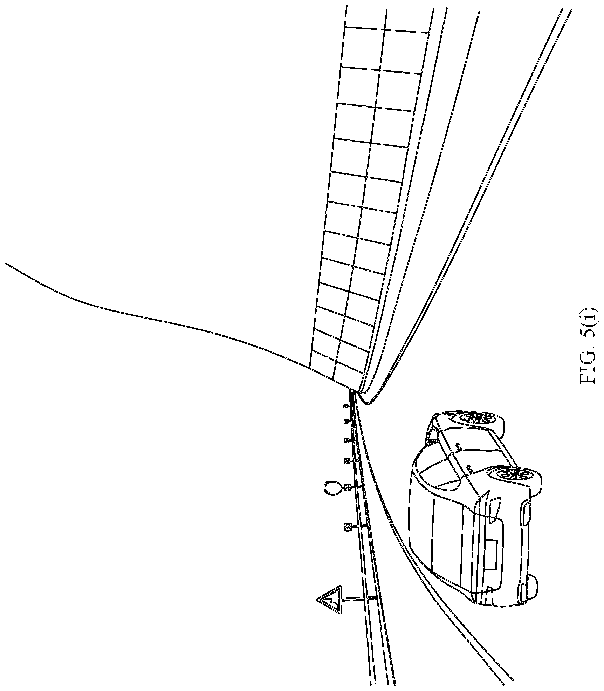

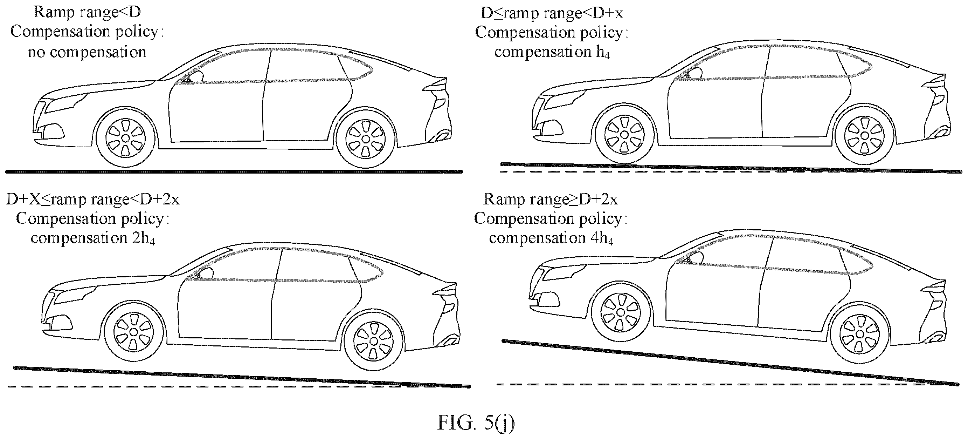

The road type information may include one or more of a highway, a suburban road, an urban road, and a mountain road. The first threshold may be set to different values corresponding to different types of roads. For example, the first threshold corresponding to the highway may be set to A. When the vehicle travels on the highway and a slope of the highway is greater than A, the first mode may be switched to the second mode based on a first preset ramp range that the slope of the highway is in. A specific adjustment manner is described in FIG. 5(c) and FIG. 5(d). For another example, the first threshold corresponding to the mountain road may be set to D. When the vehicle travels on the mountain road, and a slope of the mountain road is greater than D, the first mode may be switched to the second mode based on a second preset slope range that the slope of the mountain road is in. A specific adjustment manner is described in FIG. 5(i) and FIG. 5(j).

In embodiments of this application, when the road slope is greater than or equal to the first threshold, the acceleration capabilities of the vehicle in the case of the same speed and/or accelerator pedal opening can be improved based on the road type information and the road slope. In this way, the acceleration capability of the vehicle can further quickly match the acceleration requirement of the user when the vehicle is in the ECO mode or the power-saving mode, thereby improving driving experience of the user.

In a possible implementation, the traveling parameter information includes one or more of the average speed, the acceleration, and the accelerator pedal opening, and the switching the first mode of the vehicle to a second mode when the traveling environment information and/or the traveling parameter information meet/meets a preset condition includes: switching the first mode of the vehicle to the second mode when a current average speed of the vehicle is greater than or equal to a historical average speed of the vehicle traveling on the road; and/or switching the first mode of the vehicle to the second mode when a current acceleration of the vehicle is greater than or equal to a historical average acceleration of the vehicle traveling on the road; and/or switching the first mode of the vehicle to the second mode when a current average accelerator pedal opening of the vehicle is greater than or equal to a historical average accelerator pedal opening of the vehicle traveling on the road.

The historical average speed, the historical acceleration, and the historical accelerator pedal opening of the vehicle may belong to historical traveling data of the vehicle, and the historical traveling data may be sent to the vehicle by using a cloud server. The historical traveling data may be all historical traveling data of the vehicle, may be traveling data of the vehicle in a past month, or may be traveling data of the vehicle in a past week. This is not limited in embodiments of this application.

In embodiments of this application, comparison can be performed between the traveling parameter information of the vehicle and the historical traveling data of the vehicle. When traveling data included in the traveling parameter information of the vehicle is greater than or equal to the historical traveling data of the vehicle, it indicates that a driving style of the user is radical. In this case, the acceleration capabilities of the vehicle in the case of the same speed and/or accelerator pedal opening can be improved, so that a driving mode of the vehicle matches the driving style of the user.

In a possible implementation, the traveling parameter information further includes an accelerator pedal opening of the vehicle within preset duration, and the switching the first mode of the vehicle to a second mode when the traveling environment information and/or the traveling parameter information meet/meets a preset condition includes: switching the first mode of the vehicle to the second mode when a quantity of times that the accelerator pedal opening is greater than or equal to a second threshold is greater than or equal to a third threshold.

The second threshold may be a preset pedal opening, and the third threshold may be a preset quantity of times that a driver steps on an accelerator pedal. For example, it is detected that a quantity of times that an opening of the accelerator pedal stepped by the driver is greater than 70% within 20 seconds is five, which is greater than the preset quantity of times by two. In this case, the first mode of the vehicle may be switched to the second mode. For another example, it is detected that a quantity of times that an opening of the accelerator pedal stepped by the driver is greater than 70% within 60 seconds is 12, which is greater than the preset quantity of times by ten. In this case, the first mode of the vehicle may be switched to the second mode.

In embodiments of this application, when the accelerator pedal opening of the vehicle meets the preset condition within the preset duration, the acceleration capabilities of the vehicle in the case of the same speed and/or accelerator pedal opening can be improved. In this way, the acceleration capability of the vehicle can be adjusted in time based on a driving action of the driver when the vehicle is in the ECO mode or the power-saving mode, so that an acceleration mode of the vehicle can match a driving habit of the user.

In a possible implementation, the traveling parameter information includes the state of charge of the vehicle, and the method further includes: determining, based on the state of charge, a third driving mode in which the vehicle travels, where the ECO mode or the power-saving mode of the vehicle includes the third mode; and before the switching the first mode of the vehicle to the second mode, the method further includes: determining that the acceleration capability of the vehicle in the second mode is less than an acceleration capability of the vehicle in the third mode.

The third mode belongs to the ECO mode or the power-saving mode of the vehicle, and the acceleration capability of the vehicle in the third mode may be a maximum acceleration capability that can be reached by the vehicle at a current state of charge.

Before the vehicle switches the first mode to the second mode, a value relationship between the acceleration capability of the vehicle in the second mode and the acceleration capability of the vehicle in the third mode may be determined, to determine different acceleration compensation policies. When the acceleration capability of the vehicle in the second mode is less than the acceleration capability in the third mode, the first mode of the vehicle is switched to the second mode. When the acceleration capability of the vehicle in the second mode is greater than or equal to the acceleration capability in the third mode, the first mode of the vehicle is switched to the third mode.

That the acceleration capability of the vehicle in the second mode is less than the acceleration capability in the third mode may be determined in a plurality of manners.

For example, a current maximum output power of the battery may be determined based on the state of charge. Because the current maximum output power of the battery corresponds to a maximum output power of the power end, the maximum output power of the power end of the vehicle may be obtained. Then, an output power that is of the power end and that corresponds to the second mode is determined, and the output power is compared with the maximum output power. If the output power is less than the maximum output power, in the case of the same speed and/or accelerator pedal opening degree, the acceleration capability of the vehicle in the second mode is less than the acceleration capability in the third mode. If the output power is greater than the maximum output power, in the case of the same speed and/or accelerator pedal opening, the acceleration capability of the vehicle in the second mode is greater than the acceleration capability in the third mode.

For another example, the current maximum output power of the battery may be determined based on the state of charge. Because the current maximum output power of the battery corresponds to the maximum output power of the power end, the maximum output power of the power end of the vehicle may be obtained, and a maximum torque is obtained through calculation based on the maximum output power. Then, a torque corresponding to the second mode of the vehicle is compared with the maximum torque, and if the torque corresponding to the second mode is less than the maximum torque, in the case of the same speed and/or accelerator pedal opening, the acceleration capability of the vehicle in the second mode is less than the acceleration capability in the third mode. If a second torque is greater than the maximum torque, in the case of the same speed and/or accelerator pedal opening, the acceleration capability of the vehicle in the second mode is greater than the acceleration capability in the third mode.

In embodiments of this application, the third mode in which the vehicle travels is determined based on the current state of charge of the vehicle, and the first mode is switched to the second mode only when the acceleration capability in the second mode is less than the acceleration capability in the third mode. In this way, the acceleration capability of the vehicle can quickly match the acceleration requirement of the user within a capability range that can be reached by the vehicle battery, thereby improving driving experience of the user.

In a possible implementation, the switching the first mode of the vehicle to a second mode when the traveling environment information and/or the traveling parameter information meet/meets a preset condition includes: when the traveling environment information and/or the traveling parameter information meet/meets the preset condition, adjusting a first torque of the vehicle traveling in the first mode to a second torque of the vehicle traveling in the second mode, where in the case of the same speed and/or accelerator pedal opening, the second torque is greater than the first torque.

In embodiments of this application, when the traveling environment information and/or the traveling parameter information of the vehicle meet/meets the preset condition, the vehicle can adjust the first torque of the vehicle traveling in the first mode to the second torque of the vehicle traveling in the second mode. In this way, the acceleration capability of the vehicle can be improved by increasing the torque when the vehicle is in the ECO mode or the power-saving mode, thereby improving the driving experience of the user.

In a possible implementation, the switching the first mode of the vehicle to a second mode when the traveling environment information and/or the traveling parameter information meet/meets a preset condition includes: when the traveling environment information and/or the traveling parameter information meet/meets the preset condition, adjusting a first power of the vehicle traveling in the first mode to a second power of the vehicle traveling in the second mode, where in the case of the same speed and/or accelerator pedal opening, the second power is greater than the first power.

In embodiments of this application, when the traveling environment information and/or the traveling parameter information of the vehicle meet/meets the preset condition, the vehicle can adjust the first power of the vehicle traveling in the first mode to the second power of the vehicle traveling in the second mode. In this way, the acceleration capability of the vehicle can be improved by increasing the output power of the power end of the vehicle when the vehicle is in the ECO mode or the power-saving mode, thereby improving the driving experience of the user.

In a possible implementation, the switching the first mode of the vehicle to a second mode when the traveling environment information and/or the traveling parameter information meet/meets a preset condition includes: when the traveling environment information and/or the traveling parameter information meet/meets the preset condition, adjusting a first torque change rate of the vehicle traveling in the first mode to a second torque change rate of the vehicle traveling in the second mode, where in the case of the same speed and/or accelerator pedal opening, the second torque change rate is greater than the first torque change rate.

In embodiments of this application, when the traveling environment information and/or the traveling parameter information of the vehicle meet/meets the preset condition, the vehicle can adjust the first torque change rate of the vehicle traveling in the first mode to the second torque change rate of the vehicle traveling in the second mode. In this way, the acceleration capability of the vehicle can be improved by increasing the torque change rate of the vehicle when the vehicle is in the ECO mode or the power-saving mode, thereby improving the driving experience of the user.

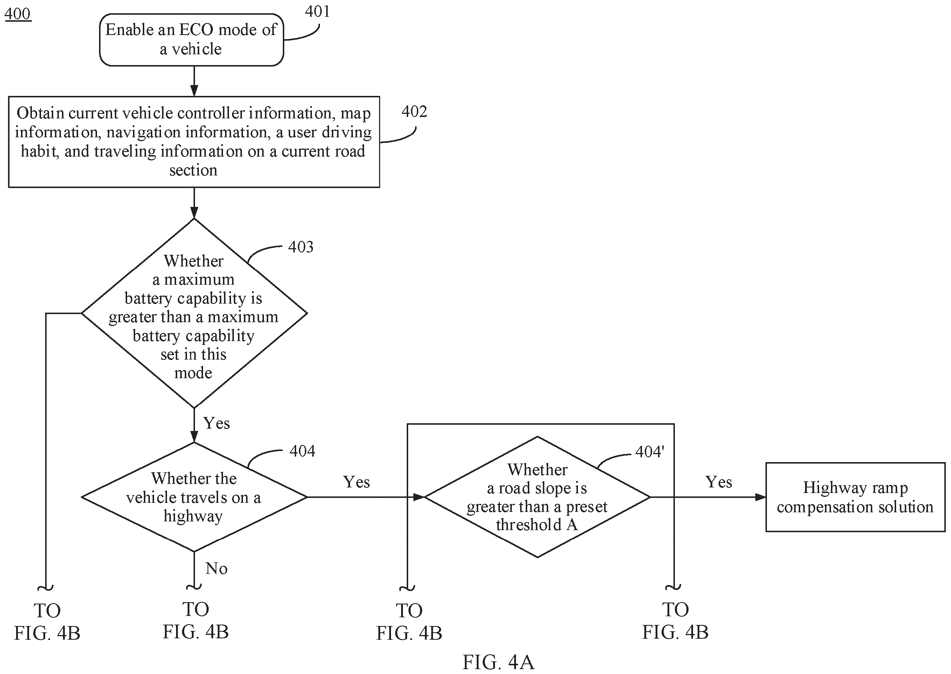

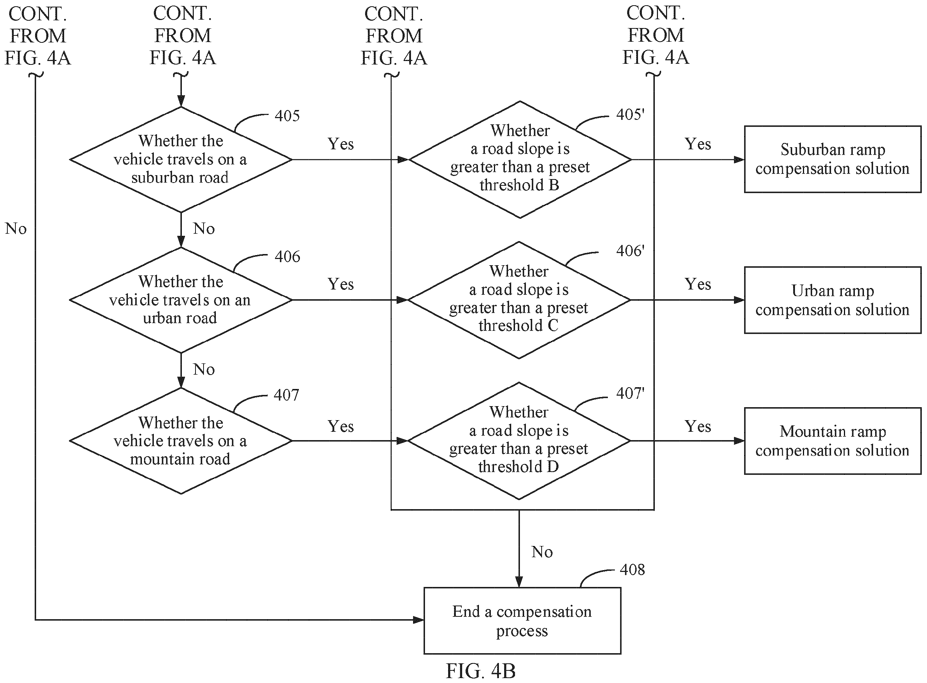

FIG. 4A and FIG. 4B are a schematic flowchart of another acceleration compensation method according to an embodiment of this application. The acceleration compensation method in FIG. 4A and FIG. 4B may be applied to the vehicle 100. A method 400 may include the following steps.

S401: Enable an ECO mode of a vehicle.

The ECO mode of the vehicle may also be referred to as a power-saving mode. In the ECO mode, because the vehicle needs to preferentially ensure a battery life, a torque or power output capability of the vehicle is limited, and an acceleration capability is affected.

The ECO mode of the vehicle may be enabled in a plurality of manners. For example, the ECO mode of the vehicle may be quickly enabled by using a human-machine interaction interface of a vehicle display. For another example, a user may send a voice instruction to an in-vehicle interaction assistant, and the interaction assistant may enable the ECO mode of the vehicle based on the voice instruction. For another example, when it is detected that a state of charge is insufficient to support the vehicle to travel to a destination in a normal traveling mode, the vehicle may automatically switch the normal traveling mode to the ECO mode.

S402: Obtain current traveling information of the vehicle.

Specifically, the traveling information of the vehicle may include one or more of vehicle controller information, road information, navigation information, user driving habit information, and driving information on a current road section. The foregoing information may be obtained by using the map module, the vehicle cloud module, and the vehicle controller in the system architecture 200 in FIG. 2. Specific meanings of the foregoing information are described in detail in the system architecture in FIG. 2. Details are not described herein again.

S403: Determine whether a maximum battery capability is greater than a maximum battery capability set in this mode.

Specifically, in this step, it needs to be determined whether the maximum battery capacity of the vehicle is greater than a maximum battery capacity in the ECO mode. If the maximum battery capacity of the vehicle is greater than the maximum battery capacity in the ECO mode, step S404 is performed. If the maximum battery capacity of the vehicle is not greater than the maximum battery capacity in the ECO mode, step S408 is performed, and a compensation process ends.

It should be understood that, because a part of the battery capability needs to be occupied when acceleration compensation is performed on the vehicle, if acceleration compensation is performed when the maximum battery capability in the ECO mode is greater than the maximum battery capability of the vehicle, acceleration compensation may fail, and a service life of the battery may be shortened.

S404: Determine whether the vehicle travels on a highway.

Specifically, whether the vehicle travels on the highway may be determined in a plurality of manners.

In a possible implementation, the vehicle may determine, based on road information and/or navigation information of a map, whether the vehicle is on the highway.

In a possible implementation, the vehicle may obtain environment information outside the vehicle by using a photographing apparatus deployed on the vehicle, and the vehicle may identify the environment information to determine, with reference to a traveling speed of the vehicle, whether the vehicle is on the highway.

For example, the vehicle collects the environment information around the vehicle at a preset time interval by using a surround-view camera, and finds that no building or traffic light appears in the environment information around the vehicle, and that the vehicle keeps traveling at a high speed (for example, 120 km/h) for long time. In this case, it may be determined that the vehicle travels on the highway.

For another example, the vehicle collects image information of a highway sign or a highway toll gate at a moment, and the vehicle keeps traveling at a high speed for long time (for example, 120 km/h). In this case, it may be determined that the vehicle travels on the highway.

In step S404, if it is determined that the vehicle travels on the highway, step S404' is performed. If it is determined that the vehicle is not on the highway, step S405 is performed.

S404': Determine whether a road slope is greater than a preset threshold A.

Specifically, the vehicle may determine, based on slope information in the road information, the slope of the highway on which the vehicle travels. When the slope is greater than or equal to the preset threshold A, the vehicle executes a highway ramp compensation solution. When the slope is less than the preset threshold A, step S408 is performed to end the compensation process.

S405: Determine whether the vehicle travels on a suburban road.

Specifically, whether the vehicle is on the suburban road may be determined in a plurality of manners.

In a possible implementation, the vehicle may determine, based on the road information and/or the navigation information of the map, whether the vehicle is on the suburban road.

In a possible implementation, the vehicle may obtain the environment information outside the vehicle by using the photographing apparatus deployed on the vehicle, and the vehicle may identify the environment information to determine, with reference to the traveling speed of the vehicle, whether the vehicle is on the suburban road.

For example, the vehicle collects the environment information around the vehicle at the preset time interval by using the surround-view camera, and finds that a building or a traffic light appears in the environment information around the vehicle at a low frequency, and that the vehicle keeps traveling at a medium speed (for example, 70 km/h) for long time. In this case, it may be determined that the vehicle travels on the suburban road.

It should be understood that the suburban road may be a first class road, that is, a road whose main function is to connect economic and political centers of major regions, and lead to an important industrial region or a traffic hub.

In step S405, if it is determined that the vehicle travels on the suburban road, step S405' is performed. If it is determined that the vehicle is not on the highway, step S406 is performed.

S405': Determine whether a road slope is greater than a preset threshold B.

Specifically, the vehicle may determine, based on the slope information in the road information, the slope of the suburban road on which the vehicle travels. When the slope is greater than or equal to the preset threshold B, the vehicle executes a suburban ramp compensation solution. When the slope is less than the preset threshold B, step S408 is performed to end the compensation process.

S406: Determine whether the vehicle travels on an urban road.

Specifically, whether the vehicle is on the urban road may be determined in a plurality of manners.

In a possible implementation, the vehicle may determine, based on the road information and/or the navigation information of the map, whether the vehicle is on the urban road.

For example, the vehicle determines, based on congestion information in the navigation information, that congestion on the road on which the vehicle travels is serious. In this case, it may be determined that the vehicle travels on the urban road.

In a possible implementation, the vehicle may obtain the environment information outside the vehicle by using the photographing apparatus deployed on the vehicle, and the vehicle may identify the environment information to determine, with reference to the traveling speed of the vehicle, whether the vehicle is on the urban road.

For example, the vehicle collects the environment information around the vehicle at the preset time interval by using the surround-view camera, and finds that the building or the traffic light appears in the environment information around the vehicle at a high frequency, and that the vehicle keeps traveling at a low speed (for example, 40 km/h) for long time, and a traveling speed of the vehicle fluctuates greatly. In this case, it may be determined that the vehicle travels on the urban road.

In step S406, if it is determined that the vehicle travels on the urban road, step S406' is performed. If it is determined that the vehicle is not on the highway, step S407 is performed.

S406': Determine whether a road slope is greater than a preset threshold C.

Specifically, the vehicle may determine, based on the slope information in the road information, the slope of the urban road on which the vehicle travels. When the slope is greater than or equal to the preset threshold C, the vehicle executes an urban ramp compensation solution. When the slope is less than the preset threshold C, step S408 is performed to end the compensation process.

S407: Determine whether the vehicle travels on a mountain road.

Specifically, whether the vehicle is on the mountain road may be determined in a plurality of manners.

In a possible implementation, the vehicle may determine, based on the road information and/or the navigation information of the map, whether the vehicle is on the mountain road.

In a possible implementation, the vehicle may obtain the environment information outside the vehicle by using the photographing apparatus deployed on the vehicle, and the vehicle may identify the environment information to determine whether the vehicle is on the mountain road.

For example, the vehicle collects the environment information around the vehicle at the preset time interval by using the surround-view camera, and finds that a mountain or a mountain road sign appears in the environment information around the vehicle. In this case, it may be determined that the vehicle travels on the mountain road.

S407': Determine whether a road slope is greater than a preset threshold D.

Specifically, the vehicle may determine, based on the slope information in the road information, the slope of the mountain road on which the vehicle travels. When the slope is greater than or equal to the preset threshold D, the vehicle executes a mountain ramp compensation solution. When the slope is less than the preset threshold D, step S408 is performed to end the compensation process.

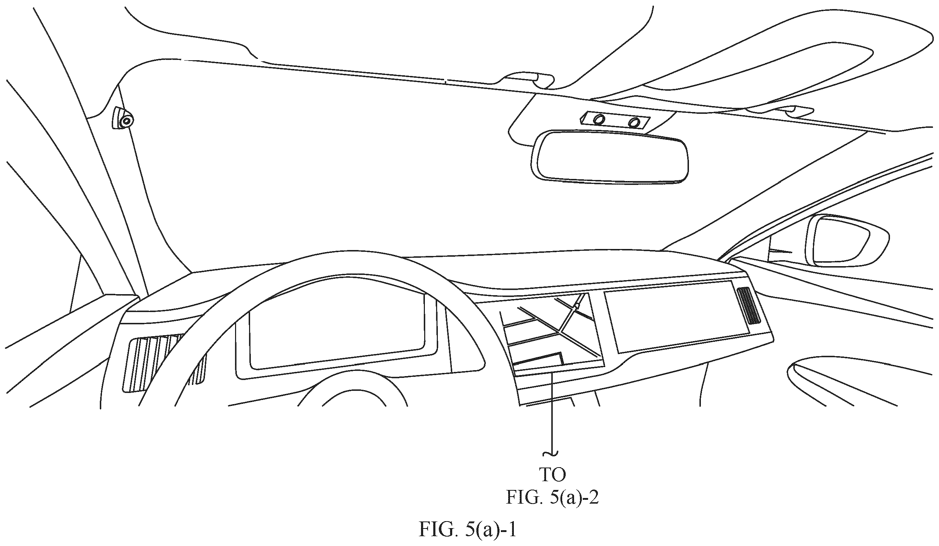

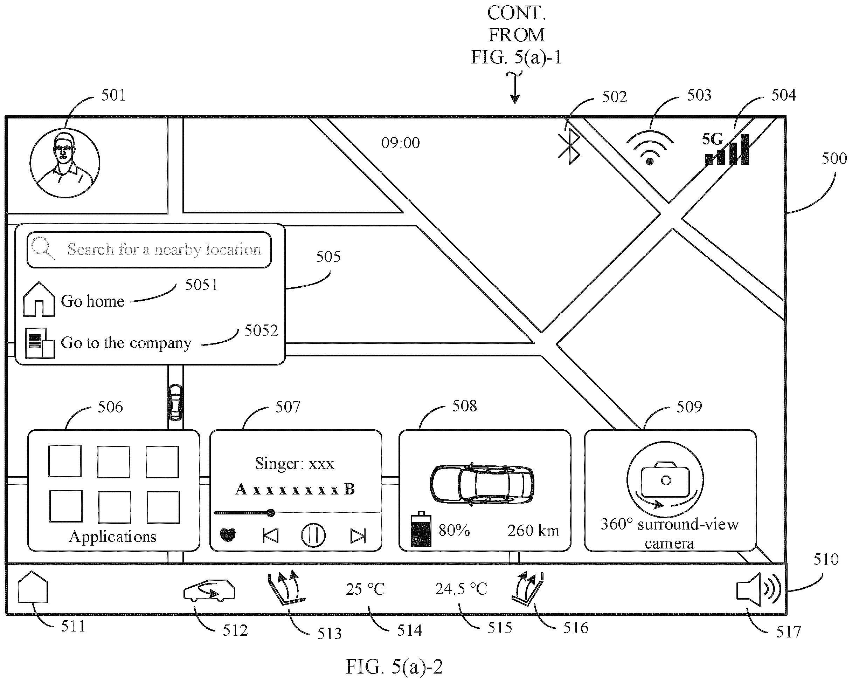

It should be understood that, values of the preset thresholds A to D may be set to be in ascending order, and specific values of the preset thresholds A to D and the compensation solutions in the various road conditions are described in FIG. 5(a)-1 to FIG. 5(j) by using examples.

S408: End the compensation process.

In embodiments of this application, a road type of the road on which the vehicle travels may be determined based on the traveling information of the vehicle, and an acceleration compensation solution is determined based on the road type and the road slope, so that in different driving scenarios, an acceleration capability of the vehicle can be enhanced while a battery life of the vehicle is ensured.

FIG. 5(a)-1 to FIG. 5(j) are diagrams of an application scenario of an acceleration compensation method according to an embodiment of this application. The application scenario in FIG. 5(a)-1 to FIG. 5(j) may be an application scenario to which the method 400 is applicable.

As shown in FIG. 5(a)-1 and FIG. 5(a)-2, when the vehicle is in a normal driving state, a central display of a vehicle displays a display interface 500 and a function bar 510. The display interface 500 includes user account login information 501, a Bluetooth function icon 502, a Wi-Fi function icon 503, a cellular network signal icon 504, an in-vehicle map application search box 505, a card 506 for switching to display all applications installed on the vehicle, a card 507 for switching to display an in-vehicle music application, a display card 508 of a state of charge of the vehicle and a remaining traveling mileage, and a display card 509 of a 360-degree (°) surround-view function of the vehicle. The in-vehicle map application search box 505 may include a go home control 5051 and a go to company control 5052 that are set by a user. The function bar 510 includes an icon 511 for switching to display a home screen of the central display, a vehicle inner circulation icon 512, a driver seat heating function icon 513, a driver area air conditioner temperature display icon 514, a front passenger area air conditioner temperature display icon 515, a front passenger seat heating function icon 516, and a volume setting icon 517.

The user may search, by using the in-vehicle map application search box 505, for a location that the user wants to reach. The vehicle may determine, based on information input by the user, a preset location that the user wants to reach and a traveling distance. In addition, the vehicle may determine, with reference to the traveling distance and a state of charge, whether the vehicle can travel to the preset location in a normal mode.

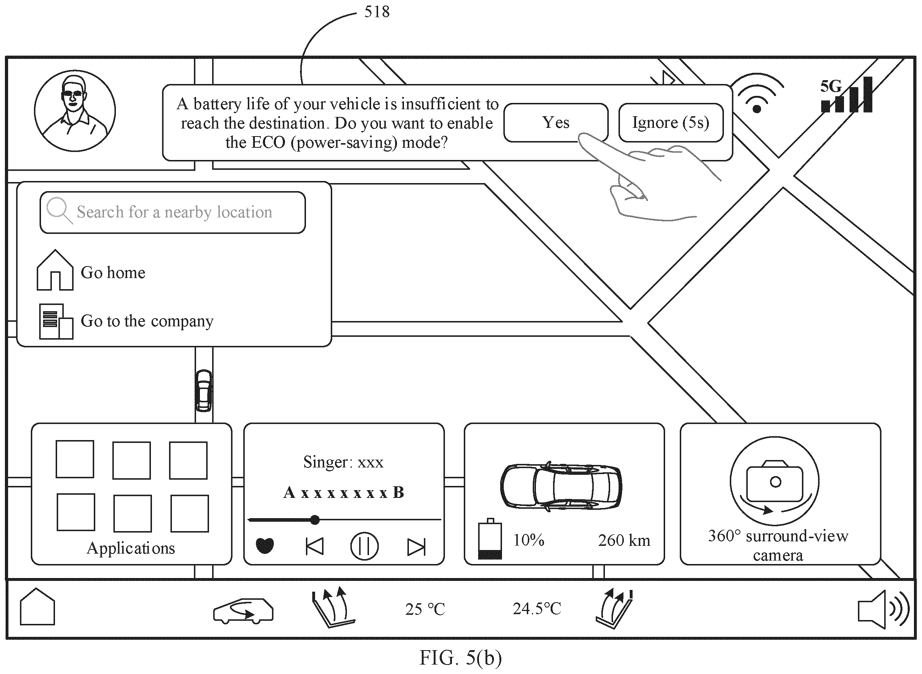

As shown in FIG. 5(b), when the vehicle determines that the state of charge is insufficient to support the vehicle to travel to the preset location in the normal mode, a prompt box 518 may be displayed on the display of the vehicle, to notify the user that a battery life of the vehicle is insufficient to reach a destination, and confirm with the user whether to enable an ECO mode. The user may tap a confirmation control in the prompt box 518 to enable the ECO mode of the vehicle.

As shown in FIG. 5(c), after the vehicle enables the ECO mode, it is detected that the vehicle travels on a highway. The vehicle may determine a slope of the highway based on obtained road slope information, and compare the determined slope with a preset threshold A to determine whether to execute a highway ramp compensation solution. Any manner described in step S404 in the method 400 may be performed to detect that the vehicle travels on the highway.

The highway ramp compensation solution is described in FIG. 5(d). As shown in FIG. 5(d), when the slope of the highway is less than A, no compensation needs to be performed. When the slope of the highway is within a range of [A, A+x), acceleration compensation $h_1$ needs to be performed on the vehicle. When the slope of the highway is within a range of [A+x, A+2x), acceleration compensation $2h_1$ needs to be performed on the vehicle. When the slope of the highway is greater than or equal to A+2x, acceleration compensation $4h_1$ needs to be performed on the vehicle.

For example, when the slope of the highway is less than 2%, no compensation needs to be performed. When the slope of the highway is within a range of [2%, 4%), acceleration compensation $h_1$ needs to be performed on the vehicle. When the slope of the highway is within a range of [4%, 6%), acceleration compensation $2h_1$ needs to be performed on the vehicle. When the slope of the highway is greater than or equal to 6%, acceleration compensation $4h_1$ needs to be performed on the vehicle.

A specific value of the compensation $h_1$ on the highway may be determined according to Table 1. For example, when the vehicle travels on the highway, the slope is within the range of [2%, 4%), a vehicle speed is 120 km/h, and an accelerator pedal opening is 20%, a torque of 10 Nm may be compensated for the vehicle. For another example, when the vehicle travels on the highway, the slope is within the range of [4%, 6%), the vehicle speed is 120 km/h, and the accelerator pedal opening is 20%, a torque of 20 Nm may be compensated for the vehicle.

It should be understood that a compensation manner for the vehicle traveling on the highway shown in the following Table 1 is merely an example for description, and data in Table 1 does not constitute any limitation on embodiments of this application.

It should be further understood that, in an acceleration compensation method in Table 1, compensation for a traveling torque of the vehicle is used as an example, and the compensation for the torque of the vehicle may also be replaced with compensation for an output power of a power end of the vehicle.

**Table 1**

| Highway-torque compensation $h_1$ (Nm) | | Vehicle speed (km/h) | | | | | | | | | | | | |
|---|---|---|---|---|---|---|---|---|---|---|---|---|---|---|
| | | 80 | 90 | 100 | 110 | 120 | 130 | 140 | 150 | 160 | 170 | 180 | 190 | 200 |
| Accelerator pedal opening (%) | 0 | 0 | 0 | 0 | 0 | 0 | 0 | 0 | 0 | 0 | 0 | 0 | 0 | 0 |
| | 5 | 0 | 0 | 0 | 0 | 0 | 0 | 0 | 0 | 0 | 0 | 0 | 0 | 0 |
| | 10 | 0 | 0 | 0 | 0 | 0 | 0 | 0 | 0 | 0 | 0 | 0 | 0 | 0 |
| | 15 | 0 | 0 | 0 | 0 | 0 | 0 | 0 | 0 | 0 | 0 | 0 | 0 | 0 |
| | 20 | 0 | 0 | 10 | 10 | 10 | 10 | 10 | 10 | 10 | 10 | 10 | 10 | 10 |
| | 25 | 0 | 0 | 12 | 12 | 12 | 12 | 12 | 12 | 12 | 12 | 12 | 12 | 12 |
| | 30 | 0 | 0 | 14 | 14 | 14 | 14 | 14 | 14 | 14 | 14 | 14 | 14 | 14 |
| | 35 | 0 | 0 | 16 | 16 | 16 | 16 | 16 | 16 | 16 | 16 | 16 | 16 | 16 |
| | 40 | 0 | 0 | 18 | 18 | 18 | 18 | 18 | 18 | 18 | 18 | 18 | 18 | 18 |
| | 45 | 0 | 0 | 20 | 20 | 20 | 20 | 20 | 20 | 20 | 20 | 20 | 20 | 20 |
| | 50 | 0 | 0 | 22 | 22 | 22 | 22 | 22 | 22 | 22 | 22 | 22 | 22 | 22 |
| | 55 | 0 | 0 | 24 | 24 | 24 | 24 | 24 | 24 | 24 | 24 | 24 | 24 | 24 |
| | 60 | 0 | 0 | 26 | 26 | 26 | 26 | 26 | 26 | 26 | 26 | 26 | 26 | 26 |
| | 65 | 0 | 0 | 28 | 28 | 28 | 28 | 28 | 28 | 28 | 28 | 28 | 28 | 28 |
| | 70 | 0 | 0 | 30 | 30 | 30 | 30 | 30 | 30 | 30 | 30 | 30 | 30 | 30 |
| | 75 | 0 | 0 | 32 | 32 | 32 | 32 | 32 | 32 | 32 | 32 | 32 | 32 | 32 |
| | 80 | 0 | 0 | 34 | 34 | 34 | 34 | 34 | 34 | 34 | 34 | 34 | 34 | 34 |
| | 85 | 0 | 0 | 36 | 36 | 36 | 36 | 36 | 36 | 36 | 36 | 36 | 36 | 36 |
| | 90 | 0 | 0 | 38 | 38 | 38 | 38 | 38 | 38 | 38 | 38 | 38 | 38 | 38 |
| | 95 | 0 | 0 | 40 | 40 | 40 | 40 | 40 | 40 | 40 | 40 | 40 | 40 | 40 |
| | 100 | 0 | 0 | 42 | 42 | 42 | 42 | 42 | 42 | 42 | 42 | 42 | 42 | 42 |

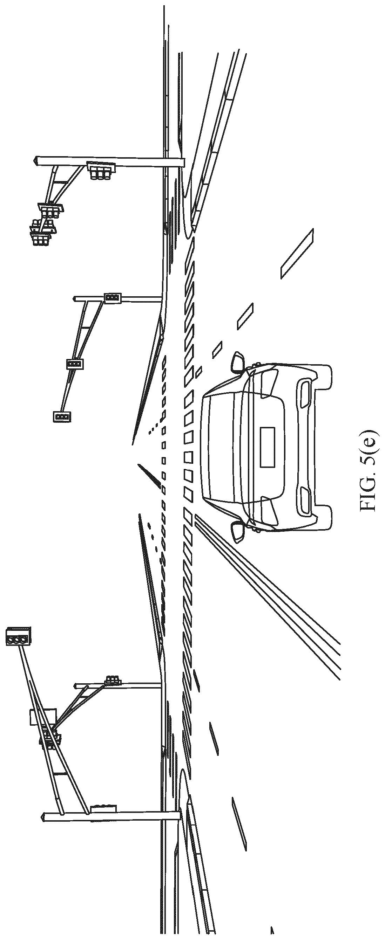

As shown in FIG. 5(e), after the vehicle enables the ECO mode, it is detected that the vehicle travels on a suburban road. The vehicle may determine a slope of the suburban road based on obtained road slope information, and compare the determined slope with a preset threshold B to determine whether to execute a suburban ramp compensation solution. Any manner described in step S405 in the method 400 may be performed to detect that the vehicle travels on the suburban road.

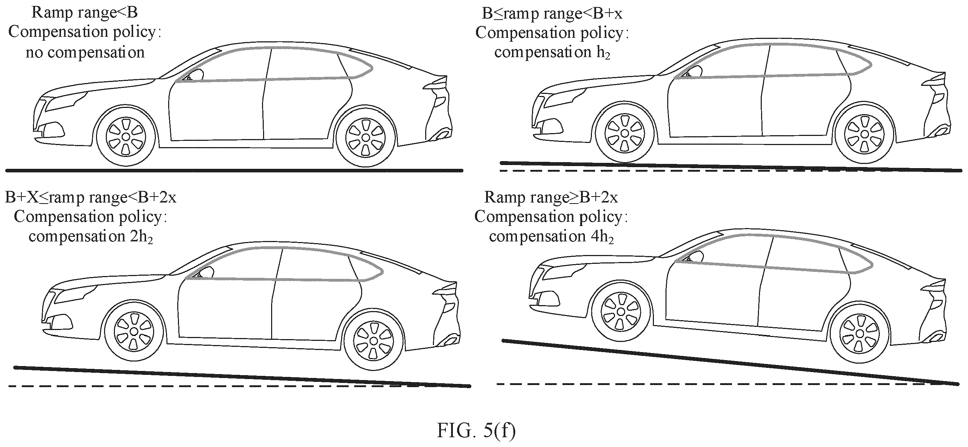

The suburban ramp compensation solution is described in FIG. 5(f). As shown in FIG. 5(f), when the slope of the suburban road is less than B, no compensation needs to be performed. When the slope of the suburban road is within a range of [B, B+x), acceleration compensation $h_2$ needs to be performed on the vehicle. When the slope of the suburban road is within a range of [B+x, B+2x), acceleration compensation $2h_2$ needs to be performed on the vehicle. When the slope of the suburban road is greater than or equal to B+2x, acceleration compensation $4h_2$ needs to be performed on the vehicle.

For example, when the slope of the suburban road is less than 4%, no compensation needs to be performed. When the slope of the suburban road is within a range of [4%, 6%), acceleration compensation $h_2$ needs to be performed on the vehicle. When the slope of the suburban road is within a range of [6%, 8%), acceleration compensation $2h_2$ needs to be performed on the vehicle. When the slope of the suburban road is greater than or equal to 8%, acceleration compensation $4h_2$ needs to be performed on the vehicle.

A specific value of the compensation $h_2$ on the vehicle traveling on the suburban road may be determined according to Table 2. For example, when the vehicle travels on the suburban road, the slope is within the range of [4%, 6%), a vehicle speed is 60 km/h, and an accelerator pedal opening is 25%, a torque of 10 Nm may be compensated for the vehicle. For another example, when the vehicle travels on the suburban road, the slope is within the range of [6%, 8%), the vehicle speed is 60 km/h, and the accelerator pedal opening is 25%, a torque of 20 Nm may be compensated for the vehicle.

It should be understood that a compensation manner for the vehicle traveling on the suburban road shown in the following Table 2 is merely an example for description, and data in Table 2 does not constitute any limitation on embodiments of this application.

It should be further understood that, in an acceleration compensation method in Table 2, the compensation for the traveling torque of the vehicle is used as an example, and the compensation for the torque of the vehicle may also be replaced with the compensation for the output power of the power end of the vehicle.

**Table 2**

| Suburban road-torque compensation $h_2$ (Nm) | | Vehicle speed (km/h) | | | | | | | | | | | | |
|---|---|---|---|---|---|---|---|---|---|---|---|---|---|---|
| | | 40 | 50 | 60 | 70 | 80 | 90 | 100 | 110 | 120 | 130 | 140 | 150 | 160 |
| Accelerator pedal opening (%) | 0 | 0 | 0 | 0 | 0 | 0 | 0 | 0 | 0 | 0 | 0 | 0 | 0 | 0 |
| | 5 | 0 | 0 | 0 | 0 | 0 | 0 | 0 | 0 | 0 | 0 | 0 | 0 | 0 |
| | 10 | 0 | 0 | 0 | 0 | 0 | 0 | 0 | 0 | 0 | 0 | 0 | 0 | 0 |
| | 15 | 0 | 0 | 0 | 0 | 0 | 0 | 0 | 0 | 0 | 0 | 0 | 0 | 0 |
| | 20 | 0 | 0 | 0 | 0 | 0 | 0 | 0 | 0 | 0 | 0 | 0 | 0 | 0 |
| | 25 | 0 | 0 | 10 | 10 | 10 | 10 | 10 | 10 | 10 | 10 | 10 | 10 | 10 |
| | 30 | 0 | 0 | 12 | 12 | 12 | 12 | 12 | 12 | 12 | 12 | 12 | 12 | 12 |
| | 35 | 0 | 0 | 14 | 14 | 14 | 14 | 14 | 14 | 14 | 14 | 14 | 14 | 14 |
| | 40 | 0 | 0 | 16 | 16 | 16 | 16 | 16 | 16 | 16 | 16 | 16 | 16 | 16 |
| | 45 | 0 | 0 | 18 | 18 | 18 | 18 | 18 | 18 | 18 | 18 | 18 | 18 | 18 |
| | 50 | 0 | 0 | 20 | 20 | 20 | 20 | 20 | 20 | 20 | 20 | 20 | 20 | 20 |
| | 55 | 0 | 0 | 22 | 22 | 22 | 22 | 22 | 22 | 22 | 22 | 22 | 22 | 22 |
| | 60 | 0 | 0 | 24 | 24 | 24 | 24 | 24 | 24 | 24 | 24 | 24 | 24 | 24 |
| | 65 | 0 | 0 | 26 | 26 | 26 | 26 | 26 | 26 | 26 | 26 | 26 | 26 | 26 |
| | 70 | 0 | 0 | 28 | 28 | 28 | 28 | 28 | 28 | 28 | 28 | 28 | 28 | 28 |
| | 75 | 0 | 0 | 30 | 30 | 30 | 30 | 30 | 30 | 30 | 30 | 30 | 30 | 30 |
| | 80 | 0 | 0 | 32 | 32 | 32 | 32 | 32 | 32 | 32 | 32 | 32 | 32 | 32 |
| | 85 | 0 | 0 | 34 | 34 | 34 | 34 | 34 | 34 | 34 | 34 | 34 | 34 | 34 |
| | 90 | 0 | 0 | 36 | 36 | 36 | 36 | 36 | 36 | 36 | 36 | 36 | 36 | 36 |
| | 95 | 0 | 0 | 38 | 38 | 38 | 38 | 38 | 38 | 38 | 38 | 38 | 38 | 38 |
| | 100 | 0 | 0 | 40 | 40 | 40 | 40 | 40 | 40 | 40 | 40 | 40 | 40 | 40 |

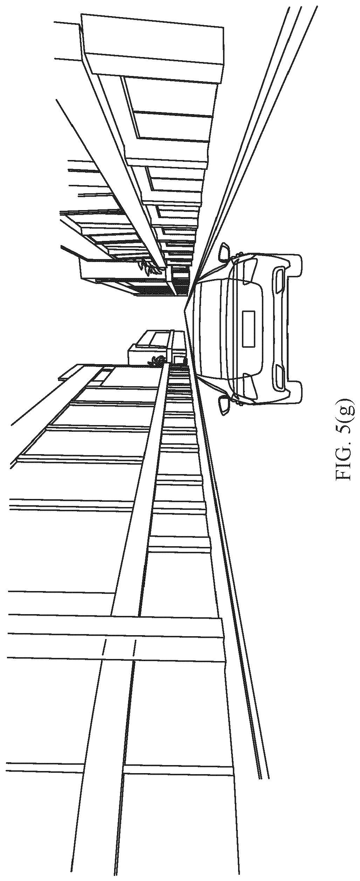

As shown in FIG. 5(g), after the vehicle enables the ECO mode, it is detected that the vehicle travels on an urban road. The vehicle may determine a slope of the urban road based on obtained road slope information, and compare the determined slope with a preset threshold C to determine whether to execute an urban ramp compensation solution. Any manner described in step S406 in the method 400 may be performed to detect that the vehicle travels on the urban road.

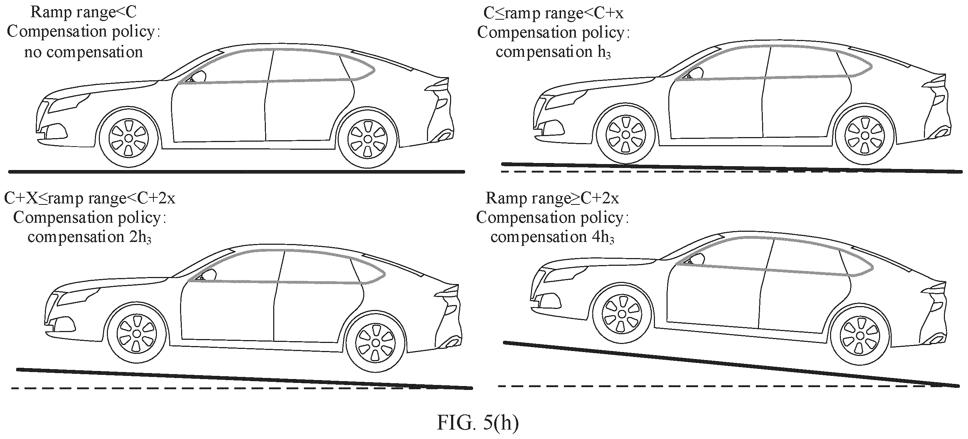

The urban ramp compensation solution is described in FIG. 5(h). As shown in FIG. 5(h), when the slope of the urban road is less than C, no compensation needs to be performed. When the slope of the urban road is within a range of [C, C+x), acceleration compensation $h_3$ needs to be performed on the vehicle. When the slope of the urban road is within a range of [C+x, C+2x), acceleration compensation $2h_3$ needs to be performed on the vehicle. When the slope of the urban road is greater than or equal to C+2x, acceleration compensation $4h_3$ needs to be performed on the vehicle.

For example, when the slope of the urban road is less than 6%, no compensation needs to be performed. When the slope of the urban road is within a range of [6%, 8%), acceleration compensation $h_3$ needs to be performed on the vehicle. When the slope of the urban road is within a range of [8%, 10%), acceleration compensation $2h_3$ needs to be performed on the vehicle. When the slope of the urban road is greater than or equal to 10%, acceleration compensation $4h_3$ needs to be performed on the vehicle.

A specific value of the compensation $h_3$ on the vehicle traveling on the urban road may be determined according to Table 3. For example, when the vehicle travels on the urban road, the slope is within the range of [6%, 8%), a vehicle speed is 40 km/h, and an accelerator pedal opening is 30%, a torque of 10 Nm may be compensated for the vehicle. For another example, when the vehicle travels on the urban road, the slope is within the range of [8%, 10%), the vehicle speed is 40 km/h, and the accelerator pedal opening is 30%, a torque of 20 Nm may be compensated for the vehicle.

It should be understood that a compensation manner for the vehicle traveling on the urban road shown in the following Table 3 is merely an example for description, and data in Table 3 does not constitute any limitation on embodiments of this application.

It should be further understood that, in an acceleration compensation method in Table 3, the compensation for the traveling torque of the vehicle is used as an example, and the compensation for the torque of the vehicle may also be replaced with the compensation for the output power of the power end of the vehicle.

**Table 3**

| Urban road-torque compensation h3 (Nm) | | Vehicle speed (km/h) | | | | | | | | | | | | |
|---|---|---|---|---|---|---|---|---|---|---|---|---|---|---|
| | | 20 | 30 | 40 | 50 | 60 | 70 | 80 | 90 | 100 | 110 | 120 | 130 | 140 |
| Accelerator pedal opening (%) | 0 | 0 | 0 | 0 | 0 | 0 | 0 | 0 | 0 | 0 | 0 | 0 | 0 | 0 |
| | 5 | 0 | 0 | 0 | 0 | 0 | 0 | 0 | 0 | 0 | 0 | 0 | 0 | 0 |
| | 10 | 0 | 0 | 0 | 0 | 0 | 0 | 0 | 0 | 0 | 0 | 0 | 0 | 0 |
| | 15 | 0 | 0 | 0 | 0 | 0 | 0 | 0 | 0 | 0 | 0 | 0 | 0 | 0 |
| | 20 | 0 | 0 | 0 | 0 | 0 | 0 | 0 | 0 | 0 | 0 | 0 | 0 | 0 |
| | 25 | 0 | 0 | 0 | 0 | 0 | 0 | 0 | 0 | 0 | 0 | 0 | 0 | 0 |
| | 30 | 0 | 0 | 10 | 10 | 10 | 10 | 10 | 10 | 10 | 10 | 10 | 10 | 10 |
| | 35 | 0 | 0 | 12 | 12 | 12 | 12 | 12 | 12 | 12 | 12 | 12 | 12 | 12 |
| | 40 | 0 | 0 | 14 | 14 | 14 | 14 | 14 | 14 | 14 | 14 | 14 | 14 | 14 |
| | 45 | 0 | 0 | 16 | 16 | 16 | 16 | 16 | 16 | 16 | 16 | 16 | 16 | 16 |
| | 50 | 0 | 0 | 18 | 18 | 18 | 18 | 18 | 18 | 18 | 18 | 18 | 18 | 18 |
| | 55 | 0 | 0 | 20 | 20 | 20 | 20 | 20 | 20 | 20 | 20 | 20 | 20 | 20 |
| | 60 | 0 | 0 | 22 | 22 | 22 | 22 | 22 | 22 | 22 | 22 | 22 | 22 | 22 |
| | 65 | 0 | 0 | 24 | 24 | 24 | 24 | 24 | 24 | 24 | 24 | 24 | 24 | 24 |
| | 70 | 0 | 0 | 26 | 26 | 26 | 26 | 26 | 26 | 26 | 26 | 26 | 26 | 26 |
| | 75 | 0 | 0 | 28 | 28 | 28 | 28 | 28 | 28 | 28 | 28 | 28 | 28 | 28 |
| | 80 | 0 | 0 | 30 | 30 | 30 | 30 | 30 | 30 | 30 | 30 | 30 | 30 | 30 |
| | 85 | 0 | 0 | 32 | 32 | 32 | 32 | 32 | 32 | 32 | 32 | 32 | 32 | 32 |
| | 90 | 0 | 0 | 34 | 34 | 34 | 34 | 34 | 34 | 34 | 34 | 34 | 34 | 34 |
| | 95 | 0 | 0 | 36 | 36 | 36 | 36 | 36 | 36 | 36 | 36 | 36 | 36 | 36 |
| | 100 | 0 | 0 | 38 | 38 | 38 | 38 | 38 | 38 | 38 | 38 | 38 | 38 | 38 |

As shown in FIG. 5(i), after the vehicle enables the ECO mode, it is detected that the vehicle travels on a mountain road. The vehicle may determine a slope of the mountain road based on obtained road slope information, and compare the determined slope with a preset threshold D to determine whether to execute a mountain ramp compensation solution. Any manner described in step S407 in the method 400 may be performed to detect that the vehicle travels on the mountain road.

The mountain ramp compensation solution is described in FIG. 5(j). As shown in FIG. 5(j), when the slope of the mountain road is less than D, no compensation needs to be performed. When the slope of the mountain road is within a range of [D, D+x), acceleration compensation $h_4$ needs to be performed on the vehicle. When the slope of the mountain road is within a range of [D+x, D+2x), acceleration compensation $2h_4$ needs to be performed on the vehicle. When the slope of the mountain road is greater than or equal to D+2x, acceleration compensation $4h_4$ needs to be performed on the vehicle.

For example, when the slope of the mountain road is less than 20%, no compensation needs to be performed. When the slope of the mountain road is within a range of [20%, 25%), acceleration compensation $h_4$ needs to be performed on the vehicle. When the slope of the mountain road is within a range of [25%, 30%], acceleration compensation $2h_4$ needs to be performed on the vehicle. When the slope of the mountain road is greater than or equal to 30%, acceleration compensation $4h_4$ needs to be performed on the vehicle.

A specific value of the compensation $h_4$ on the vehicle traveling on the mountain road may be determined according to Table 4. For example, when the vehicle travels on the mountain road, the slope is within the range of [20%, 25%), a vehicle speed is 40 km/h, and an accelerator pedal opening is 30%, a torque of 20 Nm may be compensated for the vehicle. For another example, when the vehicle travels on the mountain road, the slope is within the range of [25%, 30%), the vehicle speed is 40 km/h, and the accelerator pedal opening is 30%, a torque of 40 Nm may be compensated for the vehicle.

It should be understood that a compensation manner for the vehicle traveling on the mountain road shown in the following Table 4 is merely an example for description, and data in Table 4 does not constitute any limitation on embodiments of this application.

It should be further understood that, in an acceleration compensation method in Table 4, the compensation for the traveling torque of the vehicle is used as an example, and the compensation for the torque of the vehicle may also be replaced with the compensation for the output power of the power end of the vehicle.

**Table 4**

| Mountain road-torque compensation $h_4$ (Nm) | | Vehicle speed (km/h) | | | | | | | | | | | | |
|---|---|---|---|---|---|---|---|---|---|---|---|---|---|---|
| | | 0 | 10 | 20 | 30 | 40 | 50 | 60 | 70 | 80 | 90 | 100 | 110 | 120 |
| Accelerator pedal opening (%) | 0 | 0 | 0 | 0 | 0 | 0 | 0 | 0 | 0 | 0 | 0 | 0 | 0 | 0 |
| | 5 | 0 | 0 | 0 | 0 | 0 | 0 | 0 | 0 | 0 | 0 | 0 | 0 | 0 |
| | 10 | 0 | 0 | 0 | 0 | 0 | 0 | 0 | 0 | 0 | 0 | 0 | 0 | 0 |
| | 15 | 0 | 0 | 0 | 0 | 0 | 0 | 0 | 0 | 0 | 0 | 0 | 0 | 0 |
| | 20 | 0 | 0 | 0 | 0 | 0 | 0 | 0 | 0 | 0 | 0 | 0 | 0 | 0 |
| | 25 | 0 | 0 | 0 | 0 | 0 | 0 | 0 | 0 | 0 | 0 | 0 | 0 | 0 |
| | 30 | 20 | 20 | 20 | 20 | 20 | 0 | 0 | 0 | 0 | 0 | 0 | 0 | 0 |
| | 35 | 25 | 25 | 25 | 25 | 25 | 0 | 0 | 0 | 0 | 0 | 0 | 0 | 0 |
| | 40 | 30 | 30 | 30 | 30 | 30 | 0 | 0 | 0 | 0 | 0 | 0 | 0 | 0 |
| | 45 | 35 | 35 | 35 | 35 | 35 | 0 | 0 | 0 | 0 | 0 | 0 | 0 | 0 |
| | 50 | 40 | 40 | 40 | 40 | 40 | 0 | 0 | 0 | 0 | 0 | 0 | 0 | 0 |
| | 55 | 45 | 45 | 45 | 45 | 45 | 0 | 0 | 0 | 0 | 0 | 0 | 0 | 0 |
| | 60 | 50 | 50 | 50 | 50 | 50 | 0 | 0 | 0 | 0 | 0 | 0 | 0 | 0 |
| | 65 | 55 | 55 | 55 | 55 | 55 | 0 | 0 | 0 | 0 | 0 | 0 | 0 | 0 |
| | 70 | 60 | 60 | 60 | 60 | 60 | 0 | 0 | 0 | 0 | 0 | 0 | 0 | 0 |
| | 75 | 65 | 65 | 65 | 65 | 65 | 0 | 0 | 0 | 0 | 0 | 0 | 0 | 0 |
| | 80 | 70 | 70 | 70 | 70 | 70 | 0 | 0 | 0 | 0 | 0 | 0 | 0 | 0 |
| | 85 | 75 | 75 | 75 | 75 | 75 | 0 | 0 | 0 | 0 | 0 | 0 | 0 | 0 |
| | 90 | 80 | 80 | 80 | 80 | 80 | 0 | 0 | 0 | 0 | 0 | 0 | 0 | 0 |
| | 95 | 85 | 85 | 85 | 85 | 85 | 0 | 0 | 0 | 0 | 0 | 0 | 0 | 0 |
| | 100 | 90 | 90 | 90 | 90 | 90 | 0 | 0 | 0 | 0 | 0 | 0 | 0 | 0 |

In embodiments of this application, a most suitable acceleration compensation solution is determined based on a road type and the road slope, so that in different driving scenarios, an acceleration capability of the vehicle can be enhanced while a battery life of the vehicle is ensured.

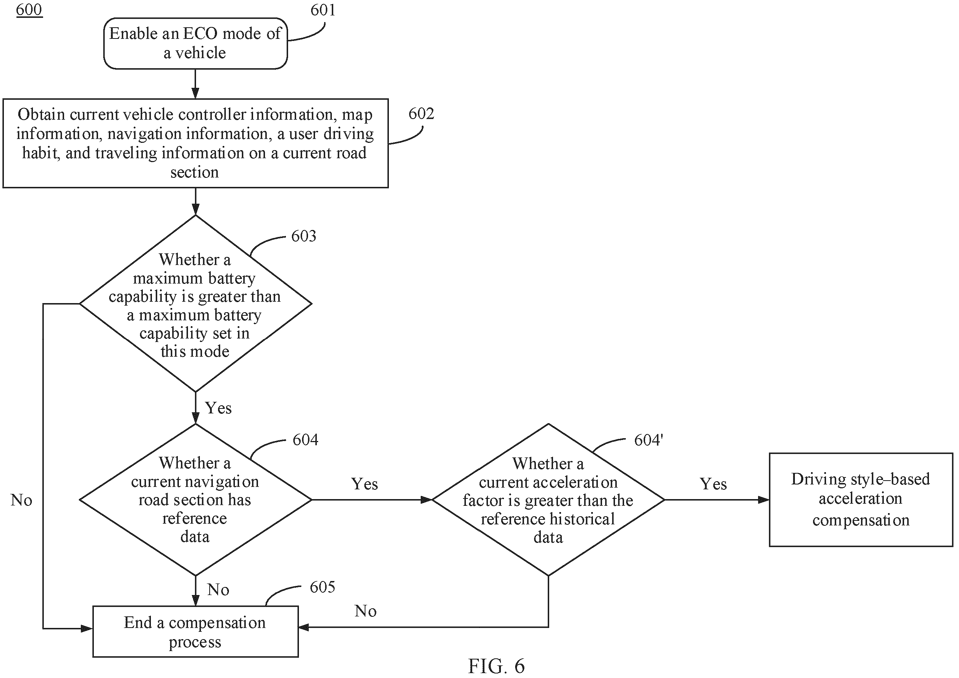

FIG. 6 is a schematic flowchart of a driving style-based acceleration compensation method according to an embodiment of this application. A method 600 may be applied to the vehicle 100 in FIG. 1, and the method 600 may include the following steps.

S601: Enable an ECO mode of a vehicle.

The ECO mode of the vehicle may be enabled in a plurality of manners. For example, the ECO mode of the vehicle may be quickly enabled by using a human-machine interaction interface of a vehicle display. For another example, a user may send a voice instruction to an in-vehicle interaction assistant, and the interaction assistant may enable the ECO mode of the vehicle based on the voice instruction. For another example, the ECO mode of the vehicle may be enabled in a manner shown in FIG. 5(b).

S602: Obtain current traveling information of the vehicle.

The traveling information of the vehicle may include one or more of vehicle controller information, road information, navigation information, user driving habit information, and driving information on a current road section. The foregoing information may be obtained by using the map module, the vehicle cloud module, and the vehicle controller in the system architecture 200 in FIG. 2. Specific meanings of the foregoing information are described in detail in the system architecture in FIG. 2. Details are not described herein again.

S603: Determine whether a maximum battery capability is greater than a maximum battery capability set in this mode.

Specifically, in this step, it needs to be determined whether the maximum battery capacity of the vehicle is greater than a maximum battery capacity in the ECO mode. If the maximum battery capacity of the vehicle is greater than the maximum battery capacity in the ECO mode, step S604 is performed. If the maximum battery capacity of the vehicle is not greater than the maximum battery capacity in the ECO mode, step S605 is performed, and a compensation process ends.

It should be understood that, because a part of the battery capability needs to be occupied when acceleration compensation is performed on the vehicle, if acceleration compensation is performed when the maximum battery capability in the ECO mode is greater than the maximum battery capability of the vehicle, acceleration compensation may fail, and a service life of the battery may be shortened.

S604: Determine whether a current navigation road section has reference historical data.

If the current navigation road section has the reference historical data, step S604' is performed. If the current road section has no reference historical data, step S605 is performed to end the acceleration compensation process.

The historical data used by the user for reference may indicate one or more of an average speed, an average acceleration, and an average throttle that are of the vehicle traveling on a same or similar road condition. For example, the vehicle once traveled at an average speed of 50 km/h on an urban road. Currently, the vehicle also travels on the urban road, and a current traveling road condition is similar to the historical road condition. The vehicle travels at an average speed of 60 km/h. In this case, the average speed of 50 km/h may be used as the reference historical data. For another example, a vehicle once traveled on a mountain road with an accelerator pedal opening of 30%. Currently, a vehicle travels on a mountain road that has a similar slope, and an accelerator pedal opening is 40%. In this case, the accelerator pedal opening of 30% may be used as the reference historical data.

S604': Determine whether a current acceleration factor is greater than the reference historical data.

Specifically, the acceleration factor may be determined according to the following formula:

$$y = f(x_1, x_2, x_3)$$

Herein, y represents the acceleration factor, $x_1$ represents that speed coefficient=current average speed/historical average speed, $x_2$ represents that acceleration coefficient=current acceleration/historical average acceleration, and $x_3$ represents that throttle coefficient=current accelerator pedal opening/historical accelerator pedal opening.

The foregoing formula may be represented in two manners.

Manner 1:

$$y = k_0 x_1 x_2 x_3$$

Herein, $k_0$ is a modification coefficient, and a specific value of $k_0$ may be determined according to an actual application of the foregoing formula.

Manner 2:

$$y=k_1x_1+k_2x_2+k_3x_3$$

Herein, $k_1$, $k_2$, and $k_3$ are weight coefficients, and specific values of $k_1$ to $k_3$ may be determined according to an actual application situation of the foregoing formula.

When the acceleration factor calculated by using the formula is greater than the reference historical data, compensation may be performed based on a driving style of the user. When the acceleration factor is less than the reference historical data, step S605 may be performed to end the acceleration compensation process.

Specifically, the acceleration compensation may be calculated by using the following formula:

$$\text{compensation value}=\text{acceleration factor}*\text{basic torque value}$$

A specific value of the basic torque value may be determined based on a correspondence in the following Table 5.

It should be understood that data of basic torque values listed in the following Table 5 is merely an example for description, and the data in Table 5 does not constitute any limitation on embodiments of this application.

Table 5

| Basic compensation torque (Nm) | | Vehicle speed (km/h) | | | | | | | | | | | | |
|---|---|---|---|---|---|---|---|---|---|---|---|---|---|---|
| | | 0 | 10 | 20 | 30 | 40 | 50 | 60 | 70 | 80 | 90 | 100 | 110 | 120 |
| Accelerator pedal opening (%) | 0 | 0 | 0 | 0 | 0 | 0 | 0 | 0 | 0 | 0 | 0 | 0 | 0 | 0 |
| | 5 | 1 | 1 | 1 | 1 | 1 | 1 | 1 | 1 | 1 | 1 | 1 | 1 | 1 |
| | 10 | 2 | 2 | 2 | 2 | 2 | 2 | 2 | 2 | 2 | 2 | 2 | 2 | 2 |
| | 15 | 3 | 3 | 3 | 3 | 3 | 3 | 3 | 3 | 3 | 3 | 3 | 3 | 3 |
| | 20 | 4 | 4 | 4 | 4 | 4 | 4 | 4 | 4 | 4 | 4 | 4 | 4 | 4 |
| | 25 | 5 | 5 | 5 | 5 | 5 | 5 | 5 | 5 | 5 | 5 | 5 | 5 | 5 |
| | 30 | 6 | 6 | 6 | 6 | 6 | 6 | 6 | 6 | 6 | 6 | 6 | 6 | 6 |
| | 35 | 7 | 7 | 7 | 7 | 7 | 7 | 7 | 7 | 7 | 7 | 7 | 7 | 7 |
| | 40 | 8 | 8 | 8 | 8 | 8 | 8 | 8 | 8 | 8 | 8 | 8 | 8 | 8 |
| | 45 | 9 | 9 | 9 | 9 | 9 | 9 | 9 | 9 | 9 | 9 | 9 | 9 | 9 |
| | 50 | 10 | 10 | 10 | 10 | 10 | 10 | 10 | 10 | 10 | 10 | 10 | 10 | 10 |
| | 55 | 11 | 11 | 11 | 11 | 11 | 11 | 11 | 11 | 11 | 11 | 11 | 11 | 11 |
| | 60 | 12 | 12 | 12 | 12 | 12 | 12 | 12 | 12 | 12 | 12 | 12 | 12 | 12 |
| | 65 | 13 | 13 | 13 | 13 | 13 | 13 | 13 | 13 | 13 | 13 | 13 | 13 | 13 |
| | 70 | 14 | 14 | 14 | 14 | 14 | 14 | 14 | 14 | 14 | 14 | 14 | 14 | 14 |
| | 75 | 15 | 15 | 15 | 15 | 15 | 15 | 15 | 15 | 15 | 15 | 15 | 15 | 15 |
| | 80 | 16 | 16 | 16 | 16 | 16 | 16 | 16 | 16 | 16 | 16 | 16 | 16 | 16 |
| | 85 | 17 | 17 | 17 | 17 | 17 | 17 | 17 | 17 | 17 | 17 | 17 | 17 | 17 |
| | 90 | 18 | 18 | 18 | 18 | 18 | 18 | 18 | 18 | 18 | 18 | 18 | 18 | 18 |
| | 95 | 19 | 19 | 19 | 19 | 19 | 19 | 19 | 19 | 19 | 19 | 19 | 19 | 19 |
| | 100 | 20 | 20 | 20 | 20 | 20 | 20 | 20 | 20 | 20 | 20 | 20 | 20 | 20 |

S605: End the compensation process.

In embodiments of this application, the acceleration factor may be obtained by comparing the current traveling speed, acceleration, and accelerator pedal opening of the vehicle with the historical traveling speed, acceleration, and accelerator pedal opening of the vehicle. Whether the current driving style of the user is more radical than a historical driving style may be determined based on the acceleration factor, and compensation is performed to different degrees based on a range that the acceleration factor is in. In this way, a requirement of the vehicle for a high power or a large torque in some scenarios can be met, and acceleration compensation is performed without affecting a driver, thereby improving driving experience of the user.

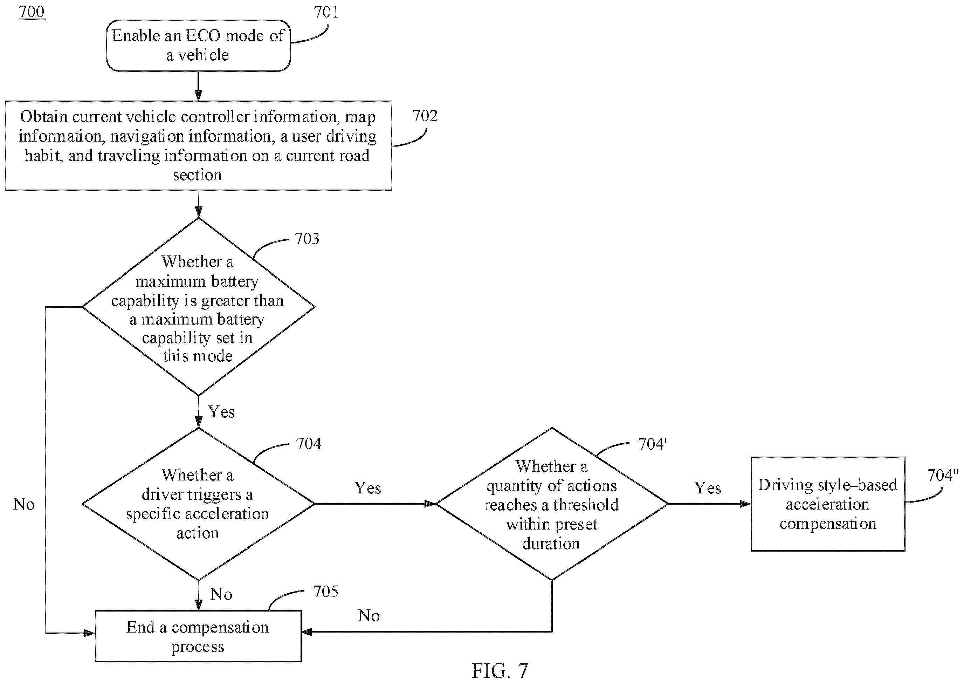

FIG. 7 is a schematic flowchart of a driving action-based acceleration compensation method according to an embodiment of this application. A method 700 may be applied to the vehicle 100 in FIG. 1, and the method 700 may include the following steps.

S701: Enable an ECO mode of a vehicle.

The ECO mode of the vehicle may be enabled in a plurality of manners. For example, the ECO mode of the vehicle may be quickly enabled by using a human-machine interaction interface of a vehicle display. For another example, a user may send a voice instruction to an in-vehicle interaction assistant, and the interaction assistant may enable the ECO mode of the vehicle based on the voice instruction. For another example, the ECO mode of the vehicle may be enabled in a manner shown in FIG. 5(b).

S702: Obtain current traveling information of the vehicle.

The traveling information of the vehicle may include one or more of vehicle controller information, road information, navigation information, user driving habit information, and driving information on a current road section. The foregoing information may be obtained by using the map module, the vehicle cloud module, and the vehicle controller in the system architecture 200 in FIG. 2. Specific meanings of the foregoing information are described in detail in the system architecture in FIG. 2. Details are not described herein again.

S703: Determine whether a maximum battery capability is greater than a maximum battery capability set in this mode.

Specifically, in this step, it needs to be determined whether the maximum battery capacity of the vehicle is greater than a maximum battery capacity in the ECO mode. If the maximum battery capacity of the vehicle is greater than the maximum battery capacity in the ECO mode, step S704 is performed. If the maximum battery capacity of the vehicle is not greater than the maximum battery capacity in the ECO mode, step S705 is performed, and a compensation process ends.

It should be understood that, because a part of the battery capability needs to be occupied when acceleration compensation is performed on the vehicle, if acceleration compensation is performed when the maximum battery capability in the ECO mode is greater than the maximum battery capability of the vehicle, acceleration compensation may fail, and a service life of the battery may be shortened.

S704: Determine whether a driver triggers a specific acceleration action.

Whether the driver triggers the specific acceleration action may be determined by detecting whether the driver steps on an accelerator pedal. If the vehicle detects, within preset duration, an action of the driver stepping on the accelerator pedal, step S704' is performed. If, within the preset duration, the action of the driver stepping on the accelerator pedal is not detected by the vehicle, step S705 is performed, and the acceleration compensation process ends.

S704': Whether a quantity of actions reaches a preset threshold within the preset duration.

Specifically, an acceleration compensation solution may be determined by detecting whether a quantity of times that the accelerator pedal stepped by the driver is greater than a second threshold within the preset duration is greater than a third threshold. If the quantity of times that the opening of the accelerator pedal stepped by the driver is greater than the second threshold within the preset duration is greater than or equal to the third threshold, step S704" is performed. If the quantity of times that the driver steps on the accelerator pedal is greater than the second threshold within the preset duration is less than the third threshold, step S705 is performed, and the acceleration compensation process ends.

S704": Perform acceleration compensation based on the driving action.

Specifically, acceleration compensation may be performed based on a solution in the following Table 6.

**Table 6**

| Driving action | Preset duration | A quantity of triggering times | Compensation |
|---|---|---|---|
| Accelerator pedal opening≥P% | $T_1$ | n | k |
| | $T_2$ | 2.5n | l |
| | $T_2$ | 5n | m |

As shown in Table 6, in a time period whose preset duration is T1, a quantity of times that an actual opening of the accelerator pedal stepped by the driver is greater than or equal to P% is greater than or equal to n. In this case, acceleration compensation k may be performed. In a time period whose preset duration is T2, a quantity of times that an actual opening of the accelerator pedal stepped by the driver is greater than or equal to P% is greater than or equal to 2.5n. In this case, acceleration compensation l may be performed. In a time period whose preset duration is T3, a quantity of times that an actual opening of the accelerator pedal stepped by the driver is greater than or equal to P% is greater than or equal to 5n. In this case, acceleration compensation m may be performed.

Table 7 is an example of Table 6.

**Table 7**

| Driving action | Preset duration (s) | A quantity of triggering times (times) | Compensation (Nm) |
|---|---|---|---|
| Accelerator pedal opening≥70% | 20s | 2 | 30 |
| | 60s | 5 | 50 |
| | 120s | 10 | 70 |

As shown in Table 7, in a time period whose preset duration is 20s, a quantity of times that an actual opening of the accelerator pedal stepped by the driver is greater than or equal to 70% is greater than or equal to 2, and a torque of 30 Nm may be compensated for the vehicle (at a vehicle speed of 0 km/h to 200 km/h). In a time period whose preset duration is 60s, a quantity of times that an actual opening of the accelerator pedal stepped by the driver is greater than or equal to 70% is greater than or equal to 5, and a torque of 50 Nm may be compensated for the vehicle (at the vehicle speed of 0 km/h to 200 km/h). In a time period whose preset duration is 120s, a quantity of times that an actual opening of the accelerator pedal stepped by the driver is greater than or equal to 70% is greater than or equal to 10, and a torque of 50 Nm may be compensated for the vehicle (at the vehicle speed of 0 km/h to 200 km/h).

S705: End the compensation process.

In embodiments of this application, different compensation solutions can be performed based on a quantity of driving actions triggered by the driver within the preset duration. In this way, an acceleration capability of the vehicle is adjusted in time based on the quantity of driving actions of the driver, so that the acceleration capability of the vehicle can match a driving habit of the user.

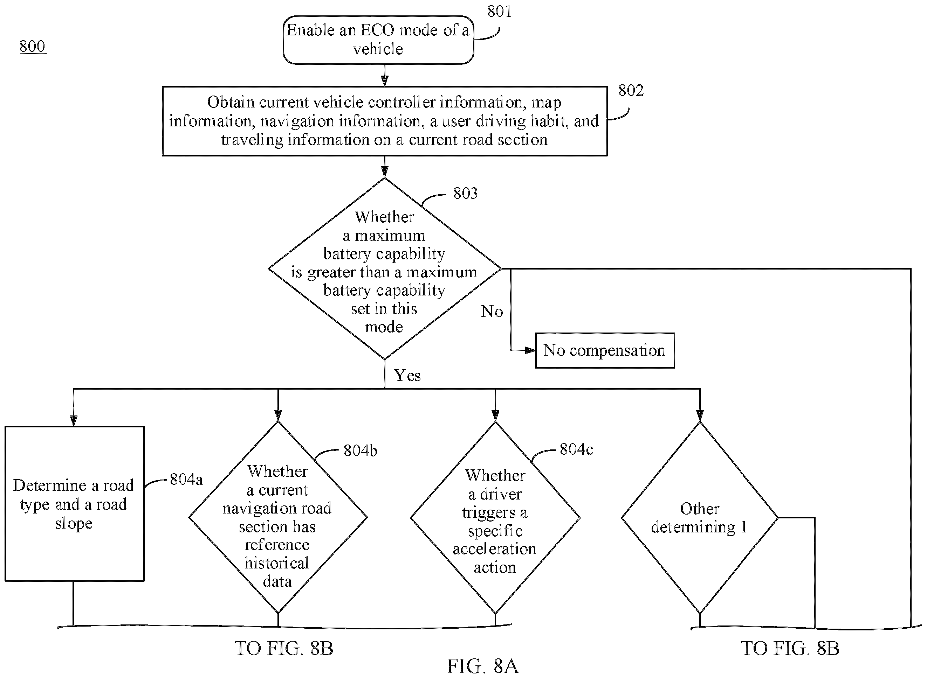

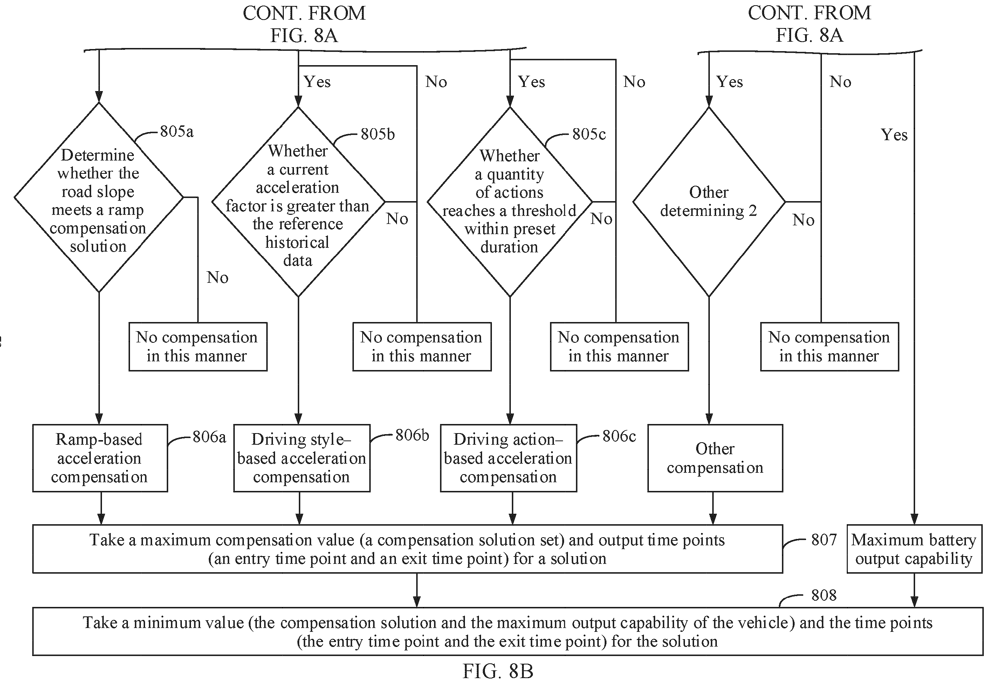

FIG. 8A and FIG. 8B are a schematic flowchart of a multi-policy-based acceleration compensation method according to an embodiment of this application. A method 800 may be applied to the vehicle 100 in FIG. 1, and the method 800 may include the following steps.

S801: Enable an ECO mode of a vehicle.

The ECO mode of the vehicle may be enabled in a plurality of manners. For example, the ECO mode of the vehicle may be quickly enabled by using a human-machine interaction interface of a vehicle display. For another example, a user may send a voice instruction to an in-vehicle interaction assistant, and the interaction assistant may enable the ECO mode of the vehicle based on the voice instruction. For another example, the ECO mode of the vehicle may be enabled in a manner shown in FIG. 5(b).

S802: Obtain current traveling information of the vehicle.

The traveling information of the vehicle may include one or more of vehicle controller information, road information, navigation information, user driving habit information, and driving information on a current road section. The foregoing information may be obtained by using the map module, the vehicle cloud module, and the vehicle controller in the system architecture 200 in FIG. 2. Specific meanings of the foregoing information are described in detail in the system architecture in FIG. 2. Details are not described herein again.

S803: Determine whether a maximum battery capability is greater than a maximum battery capability set in this mode.

Specifically, in this step, it needs to be determined whether the maximum battery capacity of the vehicle is greater than a maximum battery capacity in the ECO mode. If the maximum battery capacity of the vehicle is greater than the maximum battery capacity in the ECO mode, steps S804a to S804c are performed. If the maximum battery capacity of the vehicle is not greater than the maximum battery capacity in the ECO mode, acceleration compensation is not performed, and a compensation process ends.

It should be understood that, because a part of the battery capability needs to be occupied when acceleration compensation is performed on the vehicle, if acceleration compensation is performed when the maximum battery capability in the ECO mode is greater than the maximum battery capability of the vehicle, acceleration compensation may fail, and a service life of the battery may be shortened.

S804a: Determine a road type and a road slope.

Specifically, the road type and the road slope may be determined in the manner in the method 400. After the road type and the road slope are determined, step S805a may be performed.

S804b: Whether a current navigation road section has reference historical data.

Specifically, if the current navigation road section has the reference historical data, step S805b' is performed. If the current road section has no reference historical data, it may be determined that no acceleration compensation needs to be performed on the vehicle, and a compensation process in this manner ends. The reference historical data may be the data determined in step S604 in the method 600.

S804c: Whether a driver triggers a specific acceleration action.

Specifically, the specific acceleration action may include: stepping on an accelerator pedal. If the driver triggers the specific acceleration action within preset duration, step S805c may be performed. If the driver does not trigger the specific action within the preset duration, it may be determined that no acceleration compensation needs to be performed on the vehicle, and a compensation process in this manner ends.

It should be understood that the foregoing steps S804a to S804c may be performed simultaneously, or may be performed in a sequence. A specific execution manner may be set based on an actual application situation of the method 800.

S805a: Determine whether the road slope meets a ramp compensation solution.

Specifically, the manner described in steps S404' to S407' in the method 400 may be used to determine whether the road slope meets the ramp compensation solution. After it is determined that the road slope meets the ramp compensation solution, step S806a may be performed. If the road slope does not meet the ramp compensation solution, it may be determined that no acceleration compensation needs to be performed on the vehicle, and a compensation process in this manner ends.

S805b: Whether a current acceleration factor is greater than the reference historical data.

Specifically, the acceleration factor may be determined in a manner described in step S604' in the method 600. If the acceleration factor is greater than the reference historical data, step S806b is performed. If the current acceleration factor is less than the reference historical data, it may be determined that no acceleration compensation needs to be performed on the vehicle, and a compensation process in this manner ends.

S805c: Whether a quantity of driving actions reaches a threshold within the preset duration.

Specifically, an acceleration compensation solution may be determined by detecting whether a quantity of times that the accelerator pedal stepped by the driver is greater than a second threshold within the preset duration is greater than a third threshold. If the quantity of times that the opening of the accelerator pedal stepped by the driver is greater than or equal to the second threshold within the preset duration is greater than or equal to the third threshold, step S806c is performed. If the quantity of times that the driver steps on the accelerator pedal is greater than or equal to the second threshold within the preset duration is less than the third threshold, it may be determined that no acceleration compensation needs to be performed on the vehicle, and a compensation process in this manner ends.

It should be understood that the foregoing steps S805a to S805c may be performed simultaneously, or may be performed in a sequence. A specific execution manner may be set based on an actual application situation of the method 800.

It should be further understood that, in the foregoing steps S805a to S805c, if it is determined that acceleration compensation in one manner does not need to be performed on the vehicle, a compensation process in this manner ends, and acceleration compensation in another manner is not affected.

S806a: Ramp-based acceleration compensation.

Specifically, for ramp-based acceleration compensation, any acceleration compensation solution described in FIG. 5(d), FIG. 5(f), FIG. 5(h), FIG. 5(i), and a text part of (a)-1 to FIG.5(j) may be used.

S806b: Driving style-based acceleration compensation.

Specifically, the driving style-based acceleration compensation may use the acceleration compensation solution described in step S604' in the method 600.

S806c: Driving action-based acceleration compensation.

Specifically, the driving action-based acceleration compensation may use the acceleration compensation solution described in Table 6 or Table 7 in the method 700.

S807: Take a maximum compensation value and output time points for the solution.

Specifically, if all the plurality of manners meet a compensation condition, the maximum compensation value in all compensation solutions may be used as a final acceleration compensation value, and time points at which the vehicle enters and exits the compensation are determined.

S808: Perform compensation by using a minimum value in the compensation value of the compensation solution and a maximum battery output capability.

A maximum power and/or a maximum torque supported by a battery for acceleration compensation may be calculated by using the maximum battery output capability. The maximum power and the maximum torque are compared with a maximum value in the compensation power and/or the compensation torque that are/is obtained in step S807, to take a minimum value in the two as a final compensation solution. A compensation process is automatically started and ended based on an entry time point and an exit time point of the compensation solution.

In embodiments of this application, a plurality of acceleration compensation solutions can be applied in combination, and the final acceleration compensation solution is determined based on the maximum battery output capability. In this way, the acceleration capability of the vehicle can quickly match the acceleration requirement of the user within a capability range that can be reached by the vehicle battery, thereby improving driving experience of the user.

An embodiment of this application further provides an apparatus configured to implement any one of the foregoing methods, for example, provides an apparatus including units (or means) configured to implement the steps performed by the apparatus or the vehicle in any one of the foregoing methods.

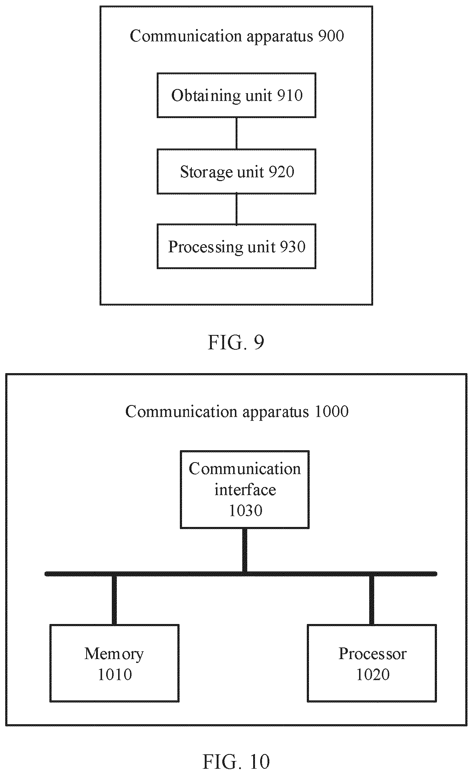

FIG. 9 is a diagram of an acceleration compensation apparatus 900 according to an embodiment of this application. The apparatus 900 may be applied to the vehicle 100 in FIG. 1.

The apparatus 900 may include an obtaining unit 910, a storage unit 920, and a processing unit 930. The obtaining unit 910 is configured to obtain data, and the obtaining unit 910 may also be referred to as a communication interface or a communication unit. The storage unit 920 may implement a corresponding data storage function, and store corresponding instructions and/or data. The processing unit 930 is configured to perform data processing. The processing unit 930 may read the instructions and/or the data in the storage unit 920, so that the apparatus implements the foregoing method embodiments.

The apparatus 900 may include: the obtaining unit 910, configured to obtain traveling environment information and/or traveling parameter information of a vehicle running in a first mode; and the processing unit 930, configured to switch the first mode of the vehicle to a second mode when the traveling environment information and/or the traveling parameter information meet/meets a preset condition. In a case of a same speed and/or accelerator pedal opening, an acceleration capability of the vehicle in the second mode is greater than an acceleration capability in the first mode, and an ECO mode or a power-saving mode of the vehicle includes the first mode and the second mode.

In a possible implementation, the traveling environment information includes a road slope; and the processing unit 930 is specifically configured to switch the first mode of the vehicle to the second mode when the slope is greater than or equal to a first threshold.

In a possible implementation, the traveling environment information further includes road type information; and the processing unit 930 is specifically configured to switch, based on the road type information, the first mode of the vehicle to the second mode when the slope is greater than or equal to the first threshold.

In a possible implementation, the traveling parameter information includes one or more of an average speed, an acceleration, and an accelerator pedal opening, and the processing unit 930 is specifically configured to: switch the first mode of the vehicle to the second mode when a current average speed of the vehicle is greater than or equal to a historical average speed of the vehicle traveling on the road; and/or switch the first mode of the vehicle to the second mode when a current acceleration of the vehicle is greater than or equal to a historical average acceleration of the vehicle traveling on the road; and/or switch the first mode of the vehicle to the second mode when a current average accelerator pedal opening of the vehicle is greater than or equal to a historical average accelerator pedal opening of the vehicle traveling on the road.

In a possible implementation, the traveling parameter information further includes an accelerator pedal opening of the vehicle within preset duration, and the processing unit 930 is specifically configured to switch the first mode of the vehicle to the second mode when a quantity of times that the accelerator pedal opening is greater than or equal to a second threshold is greater than or equal to a third threshold.

In a possible implementation, the processing unit 930 is specifically configured to determine, based on a state of charge, a third mode in which the vehicle travels, where the ECO mode or the power-saving mode of the vehicle includes the third mode; and the processing unit 930 is further configured to determine that the acceleration capability of the vehicle in the second mode is less than an acceleration capability of the vehicle in the third mode.

In a possible implementation, the processing unit 930 is specifically configured to: when the traveling environment information and/or the traveling parameter information meet/meets the preset condition, adjust a first torque of the vehicle traveling in the first mode to a second torque of the vehicle traveling in the second mode, where in the case of the same speed and/or accelerator pedal opening, the second torque is greater than the first torque.

In a possible implementation, the processing unit 930 is specifically configured to: when the traveling environment information and/or the traveling parameter information meet/meets the preset condition, adjust a first power of the vehicle traveling in the first mode to a second power of the vehicle traveling in the second mode, where in the case of the same speed and/or accelerator pedal opening, the second power is greater than the first power.

In a possible implementation, the processing unit 930 is specifically configured: when the traveling environment information and/or the traveling parameter information meet/meets the preset condition, to adjust a first torque change rate of the vehicle traveling in the first mode to a second torque change rate of the vehicle traveling in the second mode, where in the case of the same speed and/or accelerator pedal opening, the second torque change rate is greater than the first torque change rate.

It should be understood that division into units of the foregoing apparatus is merely logical function division, and during actual implementation, all or some of the units may be integrated into a physical entity, or the units may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. For example, the processor is a general purpose processor, for example, a graphics processing unit (graphics processing unit, GPU) or a microprocessor, and the memory is a memory in the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the units are implemented by designing a logical relationship between elements in the circuit. For another example, in another implementation, the hardware circuit may be implemented by using a programmable logic device (programmable logic device, PLD), for example, a field programmable gate array (field programmable gate array, FPGA), and the field programmable gate array may include a large quantity of logic gate circuits, and a connection relationship between the logic gate circuits is configured by using a configuration file, to implement the functions of some or all of the foregoing units.

All the units of the foregoing apparatus may be implemented in the form of software invoked by the processor, or may be implemented in the form of the hardware circuit, or some of the units are implemented in the form of software invoked by the processor, and remaining units are implemented in the form of the hardware circuit.

Optionally, if the apparatus 900 is located in a vehicle, the processing unit 930 may be the processor 131 in FIG. 1.

Optionally, the processing unit 930 may be a processor 1020 in FIG. 10, the storage unit may be a memory 1010 in FIG. 10, and the obtaining unit 920 may be a communication interface 1030 in FIG. 10.

FIG. 10 is a diagram of an acceleration compensation apparatus 1000 according to an embodiment of this application. The apparatus 1000 may be applied to the vehicle 100 in FIG. 1.

The acceleration compensation apparatus 1000 includes the memory 1010, the processor 1010, and the communication interface 1030. The memory 1010, the processor 1010, and the communication interface 1030 are connected by using an internal connection path. The memory 1010 is configured to store instructions, and the processor 1010 is configured to execute the instructions stored in the memory 1010, to control the input/output interface 1030 to send or receive data and/or instructions. Optionally, the memory 1010 may be coupled to the processor 1010 through an interface, or may be integrated with the processor 1010.

It should be noted that the communication interface 1030 implements communication between the communication device 1000 and another device or a communication network by using, for example but not limited to, a transceiver apparatus like a transceiver. The communication interface 1030 may further include an input/output interface (input/output interface).

The processor 1010 stores one or more computer programs, and the one or more computer programs include instructions. When the instructions are run by the processor 1010, the acceleration compensation apparatus 1000 is enabled to perform the technical solutions of the acceleration compensation methods in the foregoing embodiments.

Optionally, the apparatus 900 or the apparatus 1000 may be located in the vehicle 100 in FIG. 1.

Optionally, the apparatus 900 or the apparatus 1000 may be the computing platform 130 in the vehicle in FIG. 1.

In an implementation process, steps in the foregoing methods may be implemented by using a hardware integrated logic circuit in the processor 1010 or by using instructions in a form of software. The method disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory 1010. The processor 1010 reads information in the memory 1010, and performs the steps in the foregoing methods in combination with hardware of the processor. To avoid repetition, details are not described herein again.

An embodiment of this application further provides a computer-readable medium, where the computer-readable medium stores program code. When the computer program code is run on a computer, the computer is enabled to perform any method in FIG. 3 to FIG. 8B.

An embodiment of this application further provides a computer program product, where the computer product includes a computer program. When the computer program is run, a computer is enabled to perform any method in FIG. 3 to FIG. 8B.

An embodiment of this application further provides a chip, including at least one processor and a memory. The at least one processor is coupled to the memory, and is configured to read and execute instructions in the memory, to perform any method in FIG. 3 to FIG. 8B.

An embodiment of this application further provides an intelligent vehicle, including at least one processor and a memory. The at least one processor is coupled to the memory, and is configured to read and execute instructions in the memory, to perform any method in FIG. 3 to FIG. 8B.

An embodiment of this application further provides an intelligent vehicle, including any acceleration compensation apparatus in FIG. 9 or FIG. 10.

In embodiments of this application, the processor is a circuit having a signal processing capability. In an implementation, the processor may be a circuit having an instruction reading and running capability, for example, a CPU, a microprocessor, a GPU, or a digital signal processor (digital signal processor, DSP). In another implementation, the processor may implement a specific function by using a logical relationship of a hardware circuit, and the logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

In an implementation process, steps in the foregoing methods may be implemented by using a hardware integrated logic circuit in the processor, or by using instructions in a form of software. The method disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that in embodiments of this application, the memory may include a read-only memory and a random access memory, and provide instructions and data to the processor.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

The terms "component", "module", and the like used in this specification indicate computer-related entities, hardware, firmware, combinations of hardware and software, software, or software being executed. For example, the component may be but is not limited to a process that is run on a processor, a processor, an object, an executable file, an execution thread, a program, and/or a computer. As shown in the figures, both a computing device and an application that runs on the computing device may be components. One or more components may reside within the process and/or the execution thread, and the component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network, for example, the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps in the methods described in embodiments of this application. The foregoing storage medium includes: any medium that can store program code, like a USB flash drive, a removable hard disk, a read-only memory (read-only memory, ROM), a random access memory (random access memory, RAM), a magnetic disk, or an optical disc.

**Claims**

1.   An acceleration compensation method, wherein the method comprises:

> obtaining traveling environment information and/or traveling parameter information of a vehicle running in a first mode; and
> switching the first mode of the vehicle to a second mode when the traveling environment information and/or the traveling parameter information meet/meets a preset condition, wherein
> in a case of a same speed and/or accelerator pedal opening, an acceleration capability of the vehicle in the second mode is greater than an acceleration capability in the first mode, and an ECO mode or a power-saving mode of the vehicle comprises the first mode and the second mode.

2.   The method according to claim 1, wherein the traveling environment information comprises a road slope, and the switching the first mode of the vehicle to a second mode when the traveling environment information and/or the traveling parameter information meet/meets a preset condition comprises:
switching the first mode of the vehicle to the second mode when the road slope is greater than or equal to a first threshold.

3.   The method according to claim 2, wherein the traveling environment information further comprises road type information, and the switching the first mode of the vehicle to the second mode when the road slope is greater than or equal to a first threshold comprises:
switching, based on the road type information, the first mode of the vehicle to the second mode when the slope is greater than or equal to the first threshold.

4.   The method according to any one of claims 1 to 3, wherein the traveling parameter information comprises one or more of an average speed, an acceleration, and an accelerator pedal opening, and the switching the first mode of the vehicle to a second mode when the traveling environment information and/or the traveling parameter information meet/meets a preset condition comprises:

> switching the first mode of the vehicle to the second mode when a current average speed of the vehicle is greater than or equal to a historical average speed of the vehicle traveling on the road; and/or
> switching the first mode of the vehicle to the second mode when a current acceleration of the vehicle is greater than or equal to a historical average acceleration of the vehicle traveling on the road; and/or
> switching the first mode of the vehicle to the second mode when a current average accelerator pedal opening of the vehicle is greater than or equal to a historical average accelerator pedal opening of the vehicle traveling on the road.

5.   The method according to any one of claims 1 to 4, wherein the traveling parameter information further comprises an accelerator pedal opening of the vehicle within preset duration, and the switching the first mode of the vehicle to a second mode when the traveling environment information and/or the traveling parameter information meet/meets a preset condition comprises:
switching the first mode of the vehicle to the second mode when a quantity of times that the accelerator pedal opening is greater than or equal to a second threshold is greater than or equal to a third threshold.

6.   The method according to any one of claims 1 to 5, wherein the traveling parameter information comprises a state of charge of the vehicle, and the method further comprises:

determining, based on the state of charge, a third mode in which the vehicle travels, wherein the ECO mode or the power-saving mode of the vehicle comprises the third mode; and

before the switching the first mode of the vehicle to a second mode, the method further comprises:

determining that the acceleration capability of the vehicle in the second mode is less than an acceleration capability of the vehicle in the third mode.

7. The method according to any one of claims 1 to 6, wherein the switching the first mode of the vehicle to a second mode when the traveling environment information and/or the traveling parameter information meet/meets a preset condition comprises:

when the traveling environment information and/or the traveling parameter information meet/meets the preset condition, adjusting a first torque of the vehicle traveling in the first mode to a second torque of the vehicle traveling in the second mode, wherein

in the case of the same speed and/or accelerator pedal opening, the second torque is greater than the first torque.

8. The method according to any one of claims 1 to 6, wherein the switching the first mode of the vehicle to a second mode when the traveling environment information and/or the traveling parameter information meet/meets a preset condition comprises:

when the traveling environment information and/or the traveling parameter information meet/meets the preset condition, adjusting a first power of the vehicle traveling in the first mode to a second power of the vehicle traveling in the second mode, wherein

in the case of the same speed and/or accelerator pedal opening, the second power is greater than the first power.

9. An acceleration compensation apparatus, wherein the apparatus comprises:

an obtaining unit, configured to obtain traveling environment information and/or traveling parameter information of a vehicle running in a first mode; and

a processing unit, configured to switch the first mode of the vehicle to a second mode when the traveling environment information and/or the traveling parameter information meet/meets a preset condition, wherein

in a case of a same speed and/or accelerator pedal opening, an acceleration capability of the vehicle in the second mode is greater than an acceleration capability in the first mode, and an ECO mode or a power-saving mode of the vehicle comprises the first mode and the second mode.

10. The apparatus according to claim 9, wherein the traveling environment information comprises a road slope; and the processing unit is specifically configured to switch the first mode of the vehicle to the second mode when the road slope is greater than or equal to a first threshold.

11. The apparatus according to claim 10, wherein the traveling environment information further comprises road type information; and

the processing unit is specifically configured to switch, based on the road type information, the first mode of the vehicle to the second mode when the slope is greater than or equal to the first threshold.

12. The apparatus according to any one of claims 9 to 11, wherein the traveling parameter information comprises one or more of an average speed, an acceleration, and an accelerator pedal opening; and

the processing unit is specifically configured to: switch the first mode of the vehicle to the second mode when a current average speed of the vehicle is greater than or equal to a historical average speed of the vehicle traveling on the road; and/or

switch the first mode of the vehicle to the second mode when a current acceleration of the vehicle is greater than or equal to a historical average acceleration of the vehicle traveling on the road; and/or

switch the first mode of the vehicle to the second mode when a current average accelerator pedal opening of the vehicle is greater than or equal to a historical average accelerator pedal opening of the vehicle traveling on the road.

13. The apparatus according to any one of claims 9 to 12, wherein the traveling parameter information further comprises an accelerator pedal opening of the vehicle within preset duration; and

the processing unit is specifically configured to switch the first mode of the vehicle to the second mode when a quantity of times that the accelerator pedal opening is greater than or equal to a second threshold is greater than or equal to a third threshold.

14. The apparatus according to any one of claims 9 to 13, wherein

the processing unit is specifically configured to determine, based on a state of charge, a third mode in which the vehicle travels, wherein the ECO mode or the power-saving mode of the vehicle comprises the third mode; and the processing unit is further configured to determine that the acceleration capability of the vehicle in the second mode is less than an acceleration capability of the vehicle in the third mode.

15. The apparatus according to any one of claims 9 to 13, wherein

the processing unit is specifically configured to: when the traveling environment information and/or the traveling parameter information meet/meets the preset condition, adjust a first torque of the vehicle traveling in the first mode to a second torque of the vehicle traveling in the second mode, wherein
in the case of the same speed and/or accelerator pedal opening, the second torque is greater than the first torque.

16. The apparatus according to any one of claims 9 to 13, wherein

the processing unit is specifically configured to: when the traveling environment information and/or the traveling parameter information meet/meets the preset condition, adjust a first power of the vehicle traveling in the first mode to a second power of the vehicle traveling in the second mode, wherein
in the case of the same speed and/or accelerator pedal opening, the second power is greater than the first power.

17. An acceleration compensation apparatus, comprising at least one processor and a memory, wherein the at least one processor is coupled to the memory, and is configured to read and execute instructions in the memory, to perform the method according to any one of claims 1 to 8.

18. A computer-readable medium, wherein the computer-readable medium stores program code, and when the computer program code is run on a computer, the computer is enabled to perform the method according to any one of claims 1 to 8.

19. A chip, comprising at least one processor and a memory, wherein the at least one processor is coupled to the memory, and is configured to read and execute instructions in the memory, to perform the method according to any one of claims 1 to 8.

20. A computer program product, wherein the computer program product comprises a computer program, and when the computer program is run, a computer is enabled to perform the method according to any one of claims 1 to 8.

21. A vehicle, comprising the apparatus according to any one of claims 9 to 17.

Sensing system 120

Photographing apparatus 121

Computing platform 130

Processor 131

Processor 132

...

Processor 13n

Display apparatus 140

Vehicle 100

FIG. 1

System 200

| Map | Vehicle cloud | Vehicle controller |
|---|---|---|

**Map**

| Fixed information of the map | Navigation information of the map |
|---|---|
| Road type (highway and conventional road section) | Average speed of a vehicle flow on a road |
| Road slope | Congestion |
| Road speed limit | Vehicle location |

**Vehicle cloud**

| Historical information of a vehicle and driving habit | Distance information of the vehicle on a road section |
|---|---|
| Average vehicle speeds under speed limits | Average vehicle speed within a current distance |
| Average throttle | Average throttle within the current distance |
| Average acceleration | Average acceleration within the current distance |

**Vehicle controller**

| Current information of a vehicle | Current acceleration capability of the vehicle |
|---|---|
| Throttle | Maximum output power of a power end |
| Drive battery SOC | |
| Ambient temperature | Power torque output currently set for the vehicle |
| Quantity of passengers | |
| Acceleration setting in an acceleration mode | |

Vehicle controller (or domain controller or intelligent driving controller)

| Acceleration capability requirement map | Compensation coefficient | Acceleration compensation map | Acceleration requirement time point |
|---|---|---|---|
| Acceleration requirement location point | Acceleration requirement distance | Quantity of acceleration adjustment times within a distance | |

Vehicle controller

| New acceleration map | Compensation entry time | Compensation exit time |
|---|---|---|

FIG. 2

EP 4 530 117 A1

300

| S301: Obtain traveling environment information and/or traveling parameter information of a vehicle running in a first mode |
|---|

| S302: Switch the first mode of the vehicle to a second mode when the traveling environment information and/or the traveling parameter information meet/meets a preset condition |
|---|

FIG. 3

400

401
Enable an ECO mode of a vehicle

402
Obtain current vehicle controller information, map information, navigation information, a user driving habit, and traveling information on a current road section

403
Whether a maximum battery capability is greater than a maximum battery capability set in this mode

Yes

404
Whether the vehicle travels on a highway

No → TO FIG. 4B

Yes → TO FIG. 4B

TO FIG. 4B

404'
Whether a road slope is greater than a preset threshold A

Yes → Highway ramp compensation solution

TO FIG. 4B

FIG. 4A

CONT.
FROM
FIG. 4A

CONT.
FROM
FIG. 4A

CONT.
FROM
FIG. 4A

CONT.
FROM
FIG. 4A

Whether the vehicle travels on a suburban road — 405

No

Whether a road slope is greater than a preset threshold B — 405'

Yes → Yes → Suburban ramp compensation solution

No

Whether the vehicle travels on an urban road — 406

Yes → Whether a road slope is greater than a preset threshold C — 406'

Yes → Urban ramp compensation solution

No

Whether the vehicle travels on a mountain road — 407

Yes → Whether a road slope is greater than a preset threshold D — 407'

Yes → Mountain ramp compensation solution

No

End a compensation process — 408

FIG. 4B

TO
FIG. 5(a)-2

FIG. 5(a)-1

EP 4 530 117 A1

FIG. 5(a)-2

518

A battery life of your vehicle is insufficient to reach the destination. Do you want to enable the ECO (power-saving) mode?

Yes     Ignore (5s)

5G

Search for a nearby location

Go home

Go to the company

Applications

Singer: xxx

A x x x x x x x B

10%     260 km

360° surround-view camera

25 °C     24.5°C

FIG. 5(b)

EP 4 530 117 A1

FIG. 5(c)

Ramp range<A
Compensation policy:
no compensation

A≤ramp range<A+x
Compensation policy:
compensation $h_1$

A+X≤ramp range<A+2x
Compensation policy:
compensation $2h_1$

Ramp range≥A+2x
Compensation policy:
compensation $4h_1$

FIG. 5(d)

EP 4 530 117 A1

FIG. 5(e)

Ramp range<B
Compensation policy:
no compensation

$B \leq$ ramp range<B+x
Compensation policy:
compensation $h_2$

$B+X \leq$ ramp range<B+2x
Compensation policy:
compensation $2h_2$

Ramp range$\geq$B+2x
Compensation policy:
compensation $4h_2$

FIG. 5(f)

EP 4 530 117 A1

FIG. 5(g)

Ramp range<C
Compensation policy:
no compensation

C≤ramp range<C+x
Compensation policy:
compensation $h_3$

C+X≤ramp range<C+2x
Compensation policy:
compensation $2h_3$

Ramp range≥C+2x
Compensation policy:
compensation $4h_3$

FIG. 5(h)

FIG. 5(i)

Ramp range<D
Compensation policy:
no compensation

D≤ramp range<D+x
Compensation policy:
compensation $h_4$

D+X≤ramp range<D+2x
Compensation policy:
compensation $2h_4$

Ramp range≥D+2x
Compensation policy:
compensation $4h_4$

FIG. 5(j)

FIG. 6

600

601 — Enable an ECO mode of a vehicle

602 — Obtain current vehicle controller information, map information, navigation information, a user driving habit, and traveling information on a current road section

603 — Whether a maximum battery capability is greater than a maximum battery capability set in this mode

604 — Whether a current navigation road section has reference data

604' — Whether a current acceleration factor is greater than the reference historical data

Driving style–based acceleration compensation

605 — End a compensation process

FIG. 7

800

Enable an ECO mode of a
vehicle — 801

Obtain current vehicle controller information, map
information, navigation information, a user driving habit, and
traveling information on a current road section — 802

803

Whether
a maximum
battery capability
is greater than a maximum
battery capability
set in this
mode

No → No compensation

Yes

Determine a road
type and a road
slope — 804a

804b

Whether
a current
navigation road
section has
reference
historical
data

804c

Whether
a driver
triggers a
specific
acceleration
action

Other
determining 1

TO FIG. 8B

TO FIG. 8B

FIG. 8A

48

FIG. 8B

Communication apparatus 900

Obtaining unit 910

Storage unit 920

Processing unit 930

FIG. 9

Communication apparatus 1000

Communication
interface
1030

Memory
1010

Processor
1020

FIG. 10

## INTERNATIONAL SEARCH REPORT

| | International application No. |
|---|---|
| | **PCT/CN2022/102808** |

**A. CLASSIFICATION OF SUBJECT MATTER**

B60L 15/20(2006.01)i

According to International Patent Classification (IPC) or to both national classification and IPC

**B. FIELDS SEARCHED**

Minimum documentation searched (classification system followed by classification symbols)

B60L; B60W

Documentation searched other than minimum documentation to the extent that such documents are included in the fields searched

Electronic data base consulted during the international search (name of data base and, where practicable, search terms used)

CNKI/CNPAT/WPI/EPODOC: 华为, 周国柱, 章斯亮, 郭振华, 刘东辉, 切换, 坡度, 上坡, 经济, 省电, 加速, 补偿, eco, economy, slope, switch+, compensat+

**C. DOCUMENTS CONSIDERED TO BE RELEVANT**

| Category* | Citation of document, with indication, where appropriate, of the relevant passages | Relevant to claim No. |
|---|---|---|
| X | CN 102923016 A (HYUNDAI MOTOR CO., LTD.) 13 February 2013 (2013-02-13) description, specific embodiments, and figures 1-5 | 1-21 |
| A | CN 103625307 A (SHANGHAI VOLKSWAGEN AUTOMOTIVE CO, LTD.) 12 March 2014 (2014-03-12) entire document | 1-21 |
| A | CN 113442733 A (LINDE (CHINA) FORKLIFT TRUCK CORP., LTD.) 28 September 2021 (2021-09-28) entire document | 1-21 |
| A | CN 112744088 A (GREAT WALL MOTOR COMPANY LIMITED) 04 May 2021 (2021-05-04) entire document | 1-21 |
| A | JP 11205914 A (YAMAHA MOTOR CO., LTD.) 30 July 1999 (1999-07-30) entire document | 1-21 |
| A | US 2010052588 A1 (TOYOTA MOTOR CO., LTD. et al.) 04 March 2010 (2010-03-04) entire document | 1-21 |

☐ Further documents are listed in the continuation of Box C.   ☑ See patent family annex.

| * Special categories of cited documents: | | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2022** | **21 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/102808**

| Patent document cited in search report | | | Publication date (day/month/year) | Patent family member(s) | | | Publication date (day/month/year) |
|---|---|---|---|---|---|---|---|
| CN | 102923016 | A | 13 February 2013 | KR | 101220388 | B1 | 09 January 2013 |
| | | | | US | 2013041534 | A1 | 14 February 2013 |
| | | | | DE | 102012200263 | A1 | 14 February 2013 |
| | | | | JP | 2013042644 | A | 28 February 2013 |
| CN | 103625307 | A | 12 March 2014 | None | | | |
| CN | 113442733 | A | 28 September 2021 | None | | | |
| CN | 112744088 | A | 04 May 2021 | WO | 2021249421 | A1 | 16 December 2021 |
| JP | 11205914 | A | 30 July 1999 | None | | | |
| US | 2010052588 | A1 | 04 March 2010 | JP | 2008301598 | A | 11 December 2008 |
| | | | | WO | 2008146762 | A1 | 04 December 2008 |

Form PCT/ISA/210 (patent family annex) (January 2015)